(19) Europäisches Patentamt
European Patent Office
Office européen des brevets

(11) **EP 1 614 608 B1**

(12) **FASCICULE DE BREVET EUROPEEN**

(45) Date de publication et mention
de la délivrance du brevet:
**12.12.2007 Bulletin 2007/50**

(51) Int Cl.:
**B62D 11/24** *(2006.01)*

(21) Numéro de dépôt: **05291409.0**

(22) Date de dépôt: **30.06.2005**

(54) **Méthode de direction mixte pour véhicule à propulsion électrique**

Mischlenkungsverfahren für ein elektrisch angetriebenes Fahrzeug

Compound steering method for an electrically driven vehicle

(84) Etats contractants désignés:
**AT BE BG CH CY CZ DE DK EE ES FI FR GB GR
HU IE IS IT LI LT LU MC NL PL PT RO SE SI SK TR**

(30) Priorité: **07.07.2004 FR 0407528**

(43) Date de publication de la demande:
**11.01.2006 Bulletin 2006/02**

(73) Titulaire: **NEXTER Systems
42328 Roanne (FR)**

(72) Inventeur: **Pape, Olivier
78230 Le Pecq (FR)**

(74) Mandataire: **Célanie, Christian
Cabinet Célanie
5, avenue de Saint Cloud
BP 214
78002 Versailles Cedex (FR)**

(56) Documents cités:
**EP-A- 1 186 459**

## EP 1 614 608 B1

**Description**

La présente invention concerne une méthode de contrôle commande de direction mixte superposant une commande de direction par ripage obtenue en appliquant une consigne de vitesse différente aux roues du côté gauche et aux roues du côté droit à une commande de direction classique par braquage des roues directrices, ainsi que tout véhicule utilisant une telle méthode.

Dans le domaine des commandes de direction pour véhicule à roues, il est connu au moins deux types de direction.

La commande de direction par braquage de roues directrices permet d'obtenir un virage par une orientation de roues directrices différentes de l'axe de déplacement du véhicule. Cette commande de direction, classiquement utilisée sur la majorité des véhicules automobiles, nécessite l'orientation de roues, généralement au moins deux, situées classiquement sur un même essieu. L'orientation s'effectue, le plus souvent en maintenant sensiblement parallèles ces deux roues, au moyen d'un parallélogramme de direction (automobiles) ou encore d'une orientation de l'ensemble de l'essieu (tracteurs). Cette orientation est classiquement commandée par un organe de direction de type volant, par l'intermédiaire d'un système mécanique, par exemple une crémaillère.

La commande de direction par ripage permet d'obtenir un virage par application d'une vitesse différente aux roues d'un côté du véhicule et aux roues de l'autre côté afin de provoquer un dérapage ou ripage du véhicule. Cette commande ne nécessite pas de roues directrices ou orientables, mais nécessite une transmission permettant de transmettre des consignes différentes à au moins une roue motrice de chaque côté. Cette commande est seule applicable aux véhicules chenillés.

La direction par braquage est très efficiente, surtout aux vitesses élevées. Mais elle présente d'une part un rayon de virage minimum non nul limitant les possibilités de manoeuvre et d'autre part l'angle de braquage nécessite un dégagement des roues directrices qui réduit d'autant la largeur de la caisse d'un véhicule.

La direction par ripage présente d'intéressantes capacités de manoeuvre avec la possibilité de réaliser des rayons de virages nuls (rotation du véhicule sur place) sans nécessiter de dégagement pour les roues directrices. Mais le ripage des pneumatiques la rend peu économique et peut conduire à des usures importantes des pneumatiques en terrain adhérent. A grande vitesse, cette direction s'avère instable ou dangereuse.

Il est naturel de chercher à combiner ces deux types de direction, si possible dans une association modulable en fonction de la vitesse du véhicule et/ou de l'adhérence du terrain, en une direction mixte (dual-steering ou compound-steering), afin d'en combiner les avantages, tout en en réduisant les inconvénients.

Il est connu de FR 2671043 un véhicule à direction mixte proposant un dispositif hydromécanique permettant de superposer une direction par ripage à une direction par braquage. Un tel dispositif, de par sa technologie même est peu évolutif et peu modulable. En outre, le préambule commun aux revendications 1 et 2 a été divulgué dans le document EP 1 186 459.

La présente invention propose une méthode de contrôle commande de direction mixte offrant les mêmes avantages et d'autres supplémentaires sans en présenter les inconvénients.

L'invention a pour objet, selon une première réalisation de pilotage en couple, une méthode de contrôle commande de direction mixte, applicable à un véhicule comprenant au moins deux roues motrices, situées chacune d'un des côtés du véhicule, motorisées chacune indépendamment par un moteur électrique et au moins une roue directrice, ladite méthode superposant une commande de direction par ripage obtenue en appliquant une consigne de vitesse $V_c$ différente aux roues d'un des côtés et aux roues de l'autre côté à une commande de direction classique par braquage de la roue directrice, comportant les étapes suivantes :

- détermination des grandeurs d'entrée :

  ○ mesure ou calcul de la vitesse V du véhicule,
  ○ mesure de l'angle $\alpha$ de braquage volant,
  ○ mesure de la position $\gamma$ de la commande d'accélérateur,
  ○ mesure de la position F d'une éventuelle commande de frein,

- détermination par un module d'interface de la consigne de couple de mode commun $C_{mc}$,
- détermination des consignes de vitesse $V_c$ en appliquant une fonction de calcul aux grandeurs d'entrée,
- calcul des consignes de couple $C_c$ par un asservissement de vitesse comportant un contrôleur s'asservissant sur les consignes de vitesse $V_c$,
- calcul des consignes de couple final $C_f$ applicables à chaque moteur de roue par un sommateur ajoutant la consigne de couple de mode commun $C_{mc}$ et les consignes de couple $C_c$.

L'invention a encore pour objet, selon une autre réalisation de pilotage en vitesse, une méthode de contrôle

2

commande de direction mixte, applicable à un véhicule comprenant au moins deux roues motrices, situées chacune d'un des côtés du véhicule, motorisées chacune indépendamment par un moteur électrique et au moins une roue directrice, ladite méthode superposant une commande de direction par ripage obtenue en appliquant une consigne de vitesse $V_c$ différente aux roues d'un côté du véhicule et aux roues de l'autre côté à une commande de direction classique par braquage de la roue directrice, comportant les étapes suivantes :

- détermination des grandeurs d'entrée :

   ○ mesure ou calcul de la vitesse V du véhicule,
   ○ mesure de l'angle de braquage volant $\alpha$,
   ○ mesure de la position $\gamma$ de la commande d'accélérateur,
   ○ mesure de la position F d'une éventuelle commande de frein,

- détermination par un module d'interface de la consigne de vitesse de mode commun $V_{mc}$,
- détermination des consignes de vitesse $V_c$ en appliquant une fonction de calcul aux grandeurs d'entrée et à la vitesse de mode commun $V_{mc}$,
- calcul des consignes de couple final $C_f$, applicables à chaque moteur de roue, par un asservissement de vitesse comportant un contrôleur s'asservissant sur les consignes de vitesse $V_c$.

Selon une autre caractéristique de l'invention la fonction de calcul et l'étape de détermination des consignes de vitesse $V_c$ se décomposent en :

- calcul d'un ratio K de modulation de ripage et d'un ratio Kv de vitesse différentielle en appliquant une loi de commande aux grandeurs d'entrée,
- détermination des consignes de vitesse $V_c$ en appliquant une loi géométrique à Kv et K.

Selon une caractéristique optionnelle de l'invention, la première étape de détermination des grandeurs d'entrée inclut une mesure ou une détermination automatique d'un paramètre stratégie S et ce paramètre détermine la loi de commande utilisée pour l'étape de calcul des ratios K et Kv.

Selon une autre caractéristique de l'invention la loi de commande calcule le ratio Kv de vitesse différentielle par une fonction Kv($\alpha$) continue bijective de la variable angle de braquage $\alpha$, vérifiant sensiblement, pour tout angle de braquage $\alpha$ de son domaine, l'égalité Kv(-$\alpha$) = 1/Kv($\alpha$).

Selon un mode de réalisation particulier les valeurs de Kv($\alpha$) sont calculées par une fonction polynomiale de la variable angle de braquage $\alpha$.

Selon un mode de réalisation particulier alternatif les valeurs de Kv($\alpha$) sont déterminées par une table de correspondance.

Selon une autre caractéristique de l'invention la loi de commande calcule le ratio K de modulation de ripage par une fonction K(V) continue et décroissante de la variable vitesse V du véhicule, qui prend la valeur 1 lorsque la vitesse est nulle et la valeur 0 lorsque la vitesse est maximale.

Selon un mode de réalisation particulier la fonction K(V) est constante sur un premier palier de valeur 1 avant de décroître linéairement pour se poursuivre constante sur un second palier de valeur 0.

Selon une autre caractéristique de l'invention, pour le pilotage en couple, la loi géométrique calcule une consigne de vitesse $V_c$ par côté du véhicule respectivement pour un des côtés du véhicule selon la formule $V_{c1} = \dfrac{2}{1 + Kvf} V$ et pour l'autre côté du véhicule selon la formule $V_{c2} = \dfrac{2Kvf}{1 + Kvf} V$ , avec Kvf =1+K(Kv-1), K étant le ratio de modulation de ripage, Kv le ratio de vitesse différentielle et V la vitesse du véhicule.

Alternativement, pour le pilotage en vitesse, la loi géométrique calcule une consigne de vitesse $V_c$ par côté du véhicule respectivement pour un des côtés du véhicule selon la formule $V_{c1} = \dfrac{2}{1 + Kvf} V_{mc}$  et pour l'autre côté du véhicule selon la formule $V_{c2} = \dfrac{2Kvf}{1 + Kvf} V_{mc}$  , avec Kvf =1+K(Kv-1), K étant le ratio de modulation de ripage, Kv le ratio de vitesse différentielle et $V_{mc}$ la consigne de vitesse de mode commun.

Alternativement, pour le pilotage en couple, la loi géométrique calcule une consigne de vitesse $V_c$ par roue respectivement pour un des côtés du véhicule selon la formule $V_{c1} = \dfrac{2}{1 + Kvf} V_e$ et pour l'autre côté du véhicule selon la formule $V_{c2} = \dfrac{2Kvf}{1 + Kvf} V_e$ , avec $Kvf = 1 + K(Kv-1)$, K étant le ratio de modulation de ripage, Kv le ratio de vitesse différentielle et $V_e$ la vitesse moyenne de l'essieu portant la roue considérée.

Selon une autre caractéristique de l'invention, la loi géométrique détermine une consigne de vitesse $V_c$ respectivement par côté du véhicule ou par roue en fonction d'une table de correspondance préétablie respectivement par côté du véhicule ou par roue.

Avantageusement la table de correspondance de la loi géométrique est construite sur la base des équations théoriques.

Alternativement, la table de correspondance de la loi géométrique est construite ou adaptée sur la base de résultats empiriques.

Selon une autre caractéristique de l'invention le contrôleur est du type proportionnel intégral.

Avantageusement, la composante intégrale est réinitialisée lors d'un arrêt de la commande de direction par ripage.

Avantageusement, un module anti-windup, intégré au contrôleur, inhibe la composante intégrale en cas de saturation de la consigne de couple $C_c$.

Selon une caractéristique alternative de l'invention le contrôleur est du type proportionnel complété par un estimateur de couple.

Selon une autre caractéristique de l'invention, la méthode comporte, pour chaque roue, un module anti-dépassement de la consigne de vitesse $V_c$, recevant en entrée une limite de vitesse minimale $L_{min}$ et une limite de vitesse maximale $L_{max}$, prises égales à la consigne de vitesse $V_c$, entre lesquelles ce module maintient la vitesse $V_r$ de la roue, en supprimant la transmission du couple final $C_f$ en cas de dépassement.

Avantageusement, le module anti-dépassement utilise un moteur contrôleur de type ABS/ASR pour annuler le couple final $C_f$ et pilote ce moteur, soit en tout ou rien, soit selon un asservissement à très fort gain.

Avantageusement encore, le moteur contrôleur est confondu avec un moteur contrôleur présent dans un dispositif ABS/ASR du véhicule et une fonction de type MIN/MAX entre la vitesse du véhicule V et la consigne de vitesse $V_c$, est appliquée pour déterminer la limite de vitesse minimale $L_{min}$ et la limite de vitesse maximale $L_{max}$ en entrée du module anti-dépassement, afin de réaliser une commutation entre la fonction ABS/ASR et la fonction anti-dépassement.

Selon une autre caractéristique de l'invention, la consigne de couple de mode commun $C_{mc}$ est déterminée en fonction de la position $\gamma$ de la commande d'accélérateur et de la position F de la commande de frein.

Selon une autre caractéristique de l'invention, la consigne de vitesse de mode commun $V_{mc}$ est déterminée en fonction de la position $\gamma$ de la commande d'accélérateur et de la position F de la commande de frein.

Selon une autre caractéristique de l'invention, la consigne de couple $C_c$ déterminée par le contrôleur est multipliée par une fonction A de la variable vitesse V du véhicule, décroissante, valant 1 à vitesse nulle et 0 à vitesse élevée, afin de progressivement atténuer l'influence de la commande de direction par ripage lorsque la vitesse V du véhicule augmente.

Selon un mode de réalisation particulier de l'invention, la fonction A(V) est constante sur un premier palier de valeur 1 avant de décroître linéairement pour se poursuivre constante sur un second palier de valeur 0.

Selon une autre caractéristique de l'invention, les couples de consigne $C_c$ sont tous réduits d'une même valeur telle que le couple de consigne $C_c$ pour le moteur le plus critique reste inférieur à $C_{fmax}$ - Max ($C_{mc}$) et supérieur à - $C_{fmax}$ + Min ($C_{mc}$) pour conférer une priorité à l'avancement.

Selon une autre caractéristique alternative de l'invention le couple de mode commun $C_{mc}$ est limité pour rester inférieur à $C_{fmax}$ - Max ($C_c$) et supérieur à - $C_{fmax}$ + Min ($C_c$) pour conférer une priorité à la direction.

Selon une autre caractéristique alternative de l'invention les couples de consigne $C_c$ sont tous réduits d'une même valeur telle que la limitation positive du couple de mode commun $C_{fmax}$ - Max ($C_c$) reste supérieure à une valeur minimale garantie $C_{mcmg}$ du couple de mode commun $C_{mc}$ et respectivement que la limitation négative du couple de mode commun - $C_{fmax}$ + Min ($C_c$) reste inférieure à une valeur minimale garantie - $C_{mcmg}$ du couple de mode commun $C_{mc}$.(priorité à la direction avec avancement minimum garanti).

Selon une autre caractéristique de l'invention, en sortie de l'asservissement de vitesse, la consigne de couple $C_c$ est annulée si elle est positive pour une roue intérieure relativement au virage ou si elle est négative pour une roue extérieure relativement au virage.

Selon une autre caractéristique de l'invention, en sortie de l'asservissement de vitesse, la consigne de couple $C_c$ est multipliée par une fonction LD continue de la variable angle de braquage $\alpha$ valant 1 sur tout son domaine sauf autour de 0 où elle s'annule, afin de continûment déconnecter la commande de direction par ripage au voisinage de la ligne droite.

L'invention concerne aussi tout véhicule utilisant une méthode de contrôle commande de direction mixte selon l'un quelconque des modes de réalisation précédents.

Un avantage de la méthode selon l'invention est de présenter les avantages de la direction par braquage et ceux de la direction par ripage.

Un autre avantage de la méthode selon l'invention est de permettre de réduire l'angle de braquage maximal et ainsi de gagner du volume au niveau de la caisse du véhicule.

Un autre avantage de la méthode selon l'invention est de permettre une grande modularité du ripage qui peut à volonté être superposé en tout ou partie à la direction par braquage.

Un autre avantage de la méthode selon l'invention est de permettre de gérer différentes stratégies de mixage des deux types de direction en fonction de la vitesse, du terrain ou du mode de conduite du conducteur.

Un autre avantage de la méthode selon l'invention, lié à la technologie électrique et informatique, est la possibilité de modifier simplement et rapidement toutes les lois de commandes.

D'autres caractéristiques, détails et avantages de l'invention ressortiront plus clairement de la description détaillée donnée ci-après à titre indicatif en relation avec des dessins sur lesquels :

- la figure 1 présente l'architecture organique d'un véhicule selon l'invention,
- la figure 2 présente l'architecture de commande d'un véhicule selon l'invention,
- la figure 3 illustre un premier mode de pilotage en couple,
- la figure 4 illustre un second mode de pilotage en vitesse,
- la figure 5 présente un exemple de fonction Kv,
- la figure 6 présente deux exemples de fonctions K,
- la figure 7 présente un correcteur PI,
- la figure 8 présente un correcteur P + estimateur de couple,
- la figure 9 montre un dispositif anti-dépassement,
- la figure 10 montre un dispositif de couplage Min/Max,
- la figure 11 illustre une fonction A,
- la figure 12 illustre la méthode de pilotage munie d'un inhibiteur,
- la figure 13 montre un véhicule en virage,
- la figure 14 illustre une fonction LD.

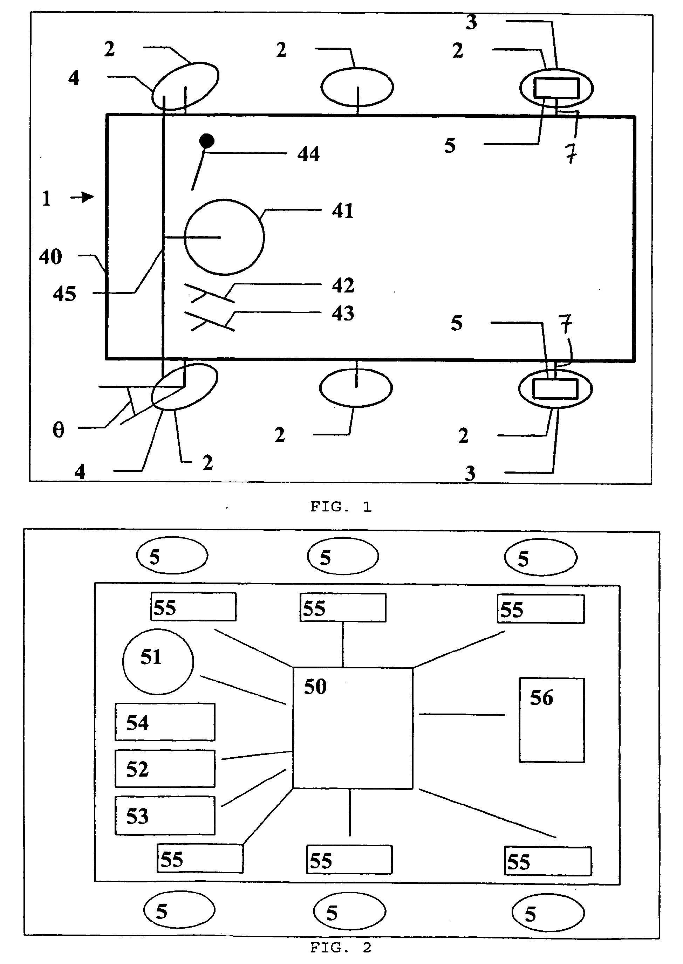

L'invention s'applique à un véhicule 1. L'architecture d'un tel véhicule 1 est illustrée par la figure 1. Un tel véhicule 1 comporte classiquement une caisse 40 à laquelle sont assemblées au moins trois roues 2 qui supportent ladite caisse 40 et permettent sa mobilité. Ces roues peuvent être 3, 4 ou plus. Certaines de ces roues 2 peuvent être des roues motrices 3 en ce qu'elles comportent un moteur de roue 5. Certaines de ces roues 2 peuvent être des roues directrices 4 en ce qu'elles sont orientables au moyen d'un mécanisme de direction 45 encore nommé dispositif de braquage. Une roue 2 peut être simultanément motrice 3 et directrice 4. Une configuration avantageuse de véhicule 1 comporte des roues 2 toutes motrices 3 et au moins un essieu de roues directrices 4. Les roues directrices 4 sont orientées autour d'un axe sensiblement vertical au moyen d'un mécanisme de direction 45, réagissant aux sollicitations effectuées par un conducteur embarqué dans le véhicule 1 agissant sur un volant 41. Une rotation de ce volant 41 d'un angle $\alpha$ produit par l'intermédiaire du mécanisme de direction 45 au niveau de la roue 4 un braquage d'un angle $\theta$. Pour la mise en place de la méthode selon l'invention il est nécessaire que le véhicule 1 comprenne au moins une roue directrice 4 afin de pouvoir appliquer une direction par braquage au véhicule 1. De plus afin de pouvoir réaliser une direction par ripage, il est nécessaire que le véhicule 1 comprenne au moins un essieu de roues motrices 3 comprenant chacune un moteur de roue 5 permettant une motorisation de chacune des roues motrices 3 indépendamment l'une de l'autre, afin de pouvoir appliquer une direction par ripage. Le terme d'essieu est ici un peu impropre en ce que les deux roues motrices 3 ne sont liées entre elles par aucun mécanisme d'aucune sorte. Un essieu désigne plutôt, dans le cadre de l'invention, une paire de roues 2 appariées de par et d'autre de la caisse 40. Le conducteur dispose pour contrôler le véhicule 1 du volant 41 précédemment décrit. Il dispose de plus d'une commande d'accélérateur 42, et éventuellement d'une commande de frein 43, par exemple au moyen de pédales ou tout autre dispositif équivalent. Cet ensemble est avantageusement complété par un sélecteur de stratégie 44. Un tel sélecteur 44 peut être un sélecteur à plusieurs positions discrètes ou tout autre dispositif équivalent.

La figure 2 illustre l'architecture de commande permettant la mise en oeuvre de la méthode selon l'invention à un tel véhicule 1. Cette architecture comprend une unité de traitement 50. Cette unité de traitement 50 est connectée à tous les capteurs et actionneurs. Chaque moteur de roue 5 est contrôlé par une électronique de commande 55 qui reçoit ses consignes de l'unité de traitement 50. Le volant 41 qui commande mécaniquement le braquage $\theta$ des roues directrices 4 par l'intermédiaire du mécanisme de direction 45 est aussi équipé d'un capteur 51 d'angle volant mesurant l'angle de rotation ou de braquage $\alpha$ du volant 41 et transmettant cette mesure à l'unité de traitement 50. De manière analogue, un capteur 52 de position de l'accélérateur mesure la position $\gamma$ de la pédale d'accélérateur 42 ou de la commande d'avancement qui la remplace le cas échéant. Un capteur 53 de position de la pédale de frein mesure la position F de la pédale de frein 43, si cette dernière est présente, pour la transmettre à l'unité de traitement 50. Il est en effet possible d'envisager soit une commande double comprenant un accélérateur 42 et un frein 43, soit une commande d'avancement unique 42. Le conducteur du véhicule 1 utilise cette commande simple ou double pour indiquer l'avancement qu'il souhaite. Si un sélecteur 44 de stratégie est présent, il est interfacé à l'unité de traitement 50 via un capteur 54 mesurant la position S dudit sélecteur 44.

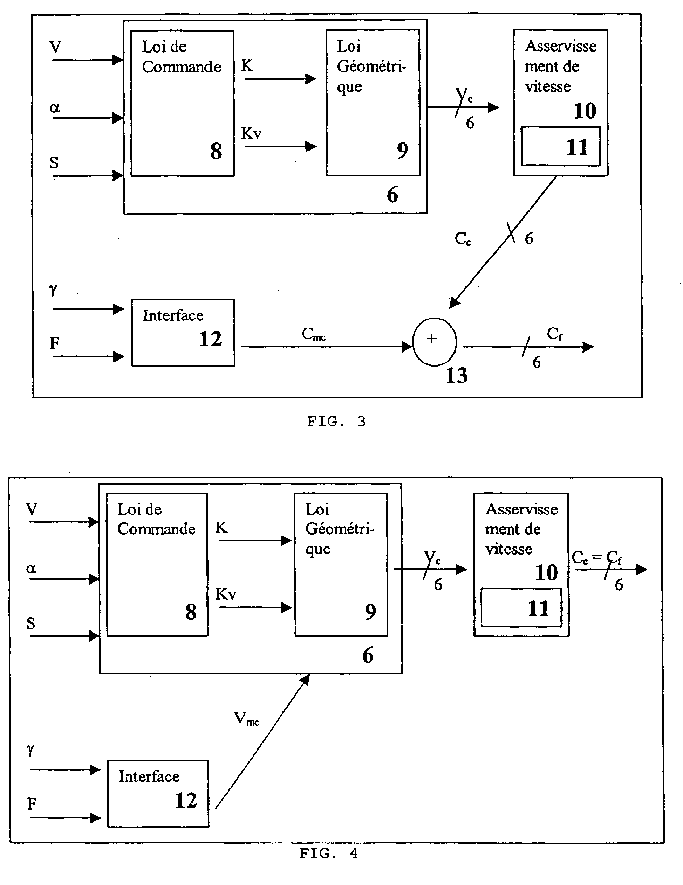

Le principe de la méthode selon l'invention consiste à superposer à la direction par braquage directement transmise aux roues 4 par rotation du volant 41, une direction par ripage 7 produite par commande différentielle des moteurs de roue 5 entre chacun des deux côtés du véhicule 1. Plusieurs approches sont possibles pour réaliser une telle méthode. Ces approches sont mises en oeuvre au moyen de l'unité de traitement 50. La figure 3 illustre un premier mode de commande mettant en oeuvre un pilotage en couple. Cette méthode comporte plusieurs étapes.

Une première étape consiste à mesurer les grandeurs d'entrée : la vitesse V du véhicule 1 et l'angle de braquage volant $\alpha$. La vitesse V est mesurée à partir d'une mesure de la vitesse d'une ou plusieurs roues 2. Si plusieurs vitesses de roues sont mesurées, idéalement les vitesses de toutes les roues, une fonction est appliquée à ces mesures, par exemple une fonction moyenne. Ceci permet d'approcher au mieux la vitesse V du centre du véhicule 1. La vitesse V peut alternativement être mesurée par un capteur lidar (radar optique) ou tout autre dispositif équivalent mesurant une vitesse V de défilement du sol sous le véhicule 1. Cette mesure V est transmise à l'unité de traitement 50. L'angle de braquage volant $\alpha$ est mesuré par le capteur d'angle volant 51 installé sur le volant 41, la colonne de direction ou le mécanisme de direction 45. Parallèlement les grandeurs d'avancement sont mesurées. Ainsi la position $\gamma$ de la pédale d'accélérateur 42 ou de la commande d'avancement est mesurée par le capteur de position 52. Si une telle pédale existe, la position F de la pédale de frein 43 est mesurée par le capteur de position 53.

Une seconde étape consiste à déterminer en fonction de la consigne d'accélération ou d'avancement $\gamma$ et de l'éventuelle consigne de freinage F, un couple de mode commun $C_{mc}$. Ce calcul est effectué par un module d'interface 12. Ce module applique une fonction d'interface aux grandeurs d'entrée $\gamma$ et éventuellement F interprétant la volonté du conducteur pour produire un couple de mode commun $C_{mc}$ ou couple d'avancement. Cette fonction d'interface peut intégrer des adaptations ergonomiques.

Une troisième étape, réalisée par une fonction de calcul 6, calcule en fonction de V et $\alpha$ une vitesse de consigne $V_c$ pour chacune des roues motrices 3. Pour illustrer la présente description un véhicule à six roues motrices 3, dont deux directrices 4 est retenu. La fonction de calcul 6 calcule dans ce cas six vitesses de consigne $V_c$.

Dans une quatrième étape, réalisée par des modules asservissement de vitesse 10, pour chaque roue 3 la vitesse de consigne $V_c$ est transformée en couple de consigne $C_c$. Pour cela on dispose d'un module d'asservissement de vitesse 10 par roue motrice 3. Le module d'asservissement 10 comprend un contrôleur 11 qui s'asservit sur la vitesse de consigne $V_c$ en entrée pour produire un couple de consigne $C_c$ en sortie.

Au cours d'une cinquième étape un sommateur 13 détermine pour chaque roue motrice 3 une consigne de couple final $C_f$ en additionnant le couple de consigne $C_c$ précédemment déterminé pour cette roue 3 au couple de mode commun $C_{mc}$. Cette consigne de couple final est ensuite transmise au moteur 5 de ladite roue 3.

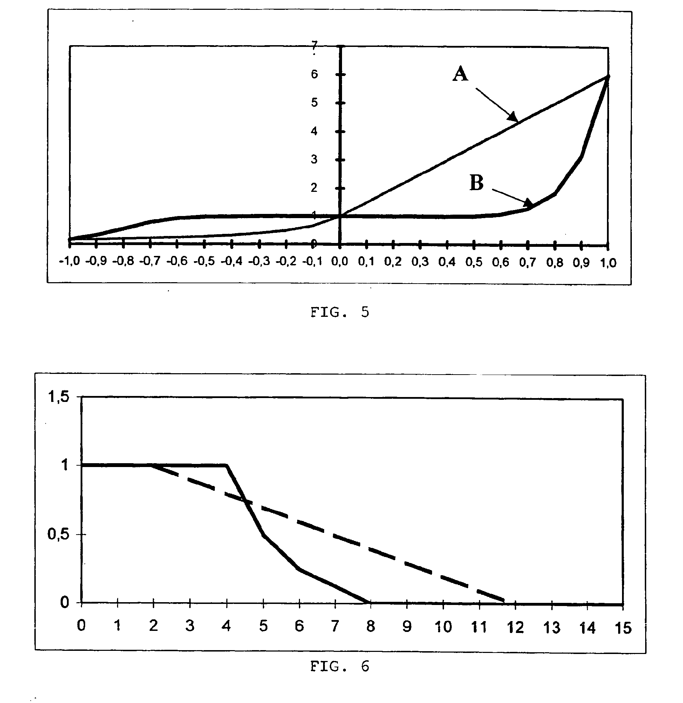

Selon un second mode de commande alternatif, illustré par la figure 4, il est possible de mettre en oeuvre un pilotage en vitesse. Cette méthode comporte plusieurs étapes.

La première étape est strictement identique à celle du premier mode et consiste à mesurer les grandeurs d'entrée.

Une seconde étape consiste à déterminer en fonction de la consigne d'accélération ou d'avancement $\gamma$ et de l'éventuelle consigne de freinage F, une vitesse de mode commun $V_{mc}$. Ce calcul est effectué par un module d'interface 12. Ce module applique une fonction d'interface aux grandeurs d'entrée $\gamma$ et éventuellement F interprétant la volonté du conducteur pour produire une vitesse de mode commun $V_{mc}$ ou vitesse d'avancement. Cette fonction d'interface peut intégrer des adaptations ergonomiques.

Au cours d'une troisième étape une fonction de calcul 6 détermine pour chaque roue une vitesse de consigne $V_c$ fonction des grandeurs d'entrée et de la vitesse de mode commun $V_{mc}$.

Dans une quatrième étape, réalisée par des modules asservissement de vitesse 10, pour chaque roue la vitesse de consigne $V_c$ est transformée en couple de consigne $C_c$ ou couple final $C_f$. Pour cela on dispose d'un module d'asservissement de vitesse 10 par roue motrice 3. Le module d'asservissement 10 comprend un contrôleur 11 qui s'asservit sur la vitesse de consigne $V_c$ en entrée pour produire un couple de consigne $C_c$ en sortie. Ces couples de consigne $C_c$ ou couples finaux $C_f$ sont ensuite transmis aux moteurs 5 de chacune des roues 3.

Indépendamment du mode de pilotage en couple ou en vitesse retenu, il est avantageux de décomposer la fonction de calcul 6 et la troisième étape de détermination des vitesses de consignes $V_c$ en deux sous-étapes. Une première sous-étape calcule deux variables intermédiaires : un ratio K de modulation de ripage et un ratio Kv de vitesse différentielle en appliquant une loi de commande 8 aux grandeurs d'entrée. Cette sous-étape est strictement identique pour un mode de pilotage en couple et un mode de pilotage en vitesse. Une seconde sous-étape détermine pour chaque roue une consigne de vitesse Vc en appliquant à K et à Kv une loi géométrique 9. Cette sous-étape est légèrement différente selon qu'il s'agit d'un pilotage en couple ou d'un pilotage en vitesse. La loi géométrique 9 est fonction de la vitesse. Dans le cas du pilotage en couple tel que revendiqué à la revendication 1, la vitesse prise en compte est la vitesse V du véhicule 1 mesurée avec les grandeurs d'entrée au cours de la première étape. Dans le cas du pilotage en vitesse tel que revendiqué à la revendication 2, la vitesse prise en compte est la vitesse de mode commun $V_{mc}$ déterminée lors de la seconde étape par le module d'interface 12. A cette seule différence minime, les formules utilisées lors de la seconde sous-étape sont identiques.

Avantageusement le véhicule 1 est équipé d'un sélecteur de stratégie 44. Ce sélecteur est interfacé à l'unité de traitement 50 par un capteur 54 et fournit une indication discrète S de stratégie. Avantageusement cette stratégie S caractérise la volonté ou le choix du conducteur en ce qui concerne le comportement du véhicule 1 et principalement le mode de superposition d'une direction par ripage 7 à la direction par braquage. Cette stratégie S est typiquement fonction de la manoeuvrabilité en fonction de l'état d'un terrain rencontré et prend ses valeurs par exemple parmi : « braquage simple », « route », « piste » et « tout-terrain ». Ce paramètre indiqué par le conducteur fournit indirectement au système une indication de l'adhérence et permet d'adapter la méthode en fonction du type de terrain. Ainsi par exemple en fonction de la stratégie sélectionnée il sera possible de moduler l'intensité du ripage superposé à la direction par braquage. Une stratégie « braquage simple » ne superpose aucun ripage à la direction par braquage. Une stratégie « route » superpose un ripage faible à la direction par braquage. Une telle stratégie correspond à un sol fortement adhérent. Sur un tel sol, un ripage trop fort conduit, dès que la vitesse est importante, à un frottement important des pneumatiques conduisant à une usure importante s'accompagnant de mauvais rendements. Dans ce cas la méthode peut prévoir un ripage réduit reproduisant, en vitesse différentielle entre les deux côtés du véhicule 1, le comportement d'un différentiel classiquement utilisé en automobile. Une stratégie « piste » correspond à un sol moyennement adhérent et permet un ripage plus important. La méthode peut prévoir dans ce cas un ripage moyen venant assister efficacement la direction par braquage. Elle peut aussi, afin de faciliter les manoeuvres, superposer un ripage beaucoup plus important en fins de courses du volant 41. A la stratégie « tout-terrain » correspond un sol de faible cohérence et présentant une adhérence faible. Il est possible de superposer un ripage important devenant même prépondérant par rapport au braquage et offrant une forte manoeuvrabilité au véhicule. La stratégie S sélectionné au moyen du sélecteur 44 influe sur la loi de commande 8 en ce qu'elle détermine la fonction K de ratio de modulation de ripage et/ou la fonction Kv de ratio de vitesse différentielle. Alternativement à un sélecteur de stratégie 44, il est possible d'avoir une détermination automatique de cette stratégie S. Cette détermination peut alors être basée sur un observateur déterminant l'adhérence du terrain.

La méthode selon l'invention utilise avantageusement les variables intermédiaires Kv et K. Kv est indicatif du virage souhaité pour la direction par ripage et représente un ratio ou rapport de vitesse entre la vitesse des roues 3 d'un côté du véhicule 1 et la vitesse des roues 3 de l'autre côté du véhicule. Alternativement et de manière équivalente il est possible de procéder en utilisant la différence entre ces deux vitesses comme variable intermédiaire. La loi de commande 8 calcule Kv par une fonction Kv($\alpha$) de l'angle de braquage volant $\alpha$. On suppose que $\alpha$ varie entre -1 correspondant à une rotation maximale du volant vers la gauche et 1 correspondant à une rotation maximale du volant vers la droite, la valeur 0 correspondant à une absence de braquage et donc à la ligne droite. La fonction Kv($\alpha$) de la variable angle de braquage $\alpha$ est avantageusement continue, bijective et vérifie, pour tout angle de braquage volant $\alpha$ appartenant au domaine pré-cité [-1,1], l'égalité Kv($-\alpha$) = 1/Kv($\alpha$). Il s'ensuit nécessairement que Kv(0)=1. Ces égalités sont sensiblement vérifiées en ce que, par commodité, des fonctions approchées ou des tables de valeurs peuvent être employées. On admet une erreur relative de 5%.

La forme de la courbe Kv($\alpha$) évolue en fonction de l'importance que l'on veut donner au ripage en fonction de la plage de l'angle volant $\alpha$ dans laquelle on se situe. La figure 5 illustre plusieurs courbes Kv($\alpha$). Une courbe A présente une partie linéaire pour les angles de braquage positifs. Pour les angles négatifs, la courbe vérifie la relation Kv ($-\alpha$) = 1/Kv ($\alpha$). Une telle courbe peut être associée à un terrain peu adhérent correspondant par exemple à une stratégie « piste » ou « tout-terrain ». Un ripage est associé sur toute la plage d'utilisation de l'angle de braquage volant. A contrario une courbe B reste pratiquement constante égale à 1 sur une grande partie de son domaine. Ceci correspond à un ripage nul sur cette plage. Pour les angles $\alpha$ de braquage volant plus élevés, proches des fins de courses, un ripage plus important est associé qui vient se superposer à la direction par braquage. Une telle courbe peut être utilisée dans le cas d'une stratégie « route ». Tant que l'angle de braquage volant demandé reste faible, seule la direction par braquage est utilisée. Lorsque le volant est tourné vers des angles de braquages extrêmes, un ripage vient compléter le braquage afin de faciliter certaines manoeuvres. Il est ainsi possible en variant la forme de la courbe Kv($\alpha$) d'obtenir des comportements différents. Il est ainsi possible d'associer un comportement à chaque stratégie S.

Un mode de réalisation particulier de la fonction Kv de la variable angle de braquage volant $\alpha$ consiste à calculer ses valeurs en utilisant une fonction polynomiale. Un exemple d'une telle fonction est la fonction :

$$Kv(\alpha) = 0.055\ \alpha^2 + 0,364\ \alpha + 1.01$$

ou encore la fonction :

$$Kv(\alpha) = 0.227\ \alpha^2 + 0,775\ \alpha + 1.05$$

On note que ces fonctions ne vérifient l'égalité $Kv(-\alpha) = 1/Kv(\alpha)$ que de manière approchée.

Un autre mode de réalisation de la fonction Kv consiste à calculer ses valeurs pour $\alpha$ positif selon une formule quelconque pouvant être polynomiale et de calculer ses valeurs pour $\alpha$ négatif en utilisant l'égalité $Kv(-\alpha) = 1/Kv(\alpha)$. La courbe B de la Fig. 5 est ainsi déterminée en utilisant la fonction $Kv(\alpha) = 5\alpha^8 + 1$ pour les $\alpha$ positifs.

Un autre mode de réalisation de la fonction Kv consiste en l'utilisation d'une table de correspondance 16. Une telle table comprend, associée à chaque valeur de $\alpha$, une valeur pré-calculée Kv. Cette table fournit ainsi en sortie pour une valeur de $\alpha$ donnée en entrée la valeur de $Kv(\alpha)$ correspondante. Cette table de correspondance 16 est remplie soit à l'aide d'une fonction d'un des types précédemment envisagés, soit à partir de valeurs issues de l'expérimentation, soit encore à partir d'un calcul, les résultats numériques obtenus étant ensuite corrigés empiriquement. Il est évidemment possible de disposer de plusieurs tables de correspondance 16 afin de proposer différents Kv, par exemple en fonction de la stratégie S sélectionnée.

K est un ratio de modulation de ripage et est indicatif de la quantité de ripage appliquée en superposition au braquage. K est fonction de la vitesse V du véhicule 1. Il est connu que la direction par ripage peut devenir instable ou dangereuse lorsque la vitesse V du véhicule 1 augmente. Aussi une multiplication par le ratio K atténue l'influence du ripage à grande vitesse. La fonction K est une fonction continue et décroissant de la vitesse V valant 1 aux vitesses faibles, un ripage maximal étant appliqué, et s'annulant aux vitesses élevées, réduisant ainsi progressivement l'influence du ripage appliqué au fur et à mesure que la vitesse V augmente. A grande vitesse le ripage normalement calculé par la méthode est complètement annulé. Le ratio K applique ainsi un « étouffement » progressif du ripage en fonction de la vitesse V.

La figure 6 montre plusieurs exemples de telles fonctions K de la variable V. La fonction K(V) présente une première partie ou elle est, en un premier palier, constante égale à 1 pour une plage de vitesses faibles. Dans cette plage le ripage déterminé par la méthode objet de la présente invention est totalement appliqué. Dans une troisième partie la fonction K(V) est, en un second palier, constante égale à 0 pour une plage de vitesses élevées. Dans cette plage le ripage est totalement « étouffé ». Entre cette première et cette troisième parties, la fonction K(V) présente une seconde partie décroissante, pour une plage de vitesse moyenne intermédiaire. Dans cette plage le ripage est progressivement et continûment « étouffé ». Selon un mode de réalisation préférentiel, dans la plage de vitesse intermédiaire, la fonction K(V) décroît linéairement entre les deux paliers. Le second palier peut être réduit au minimum, la portion décroissante se terminant en s'annulant à la vitesse maximale. Selon un mode de réalisation préférentiel, la fonction $K(V)$ vaut 1 pour les vitesses comprises entre 0 et $V_{max}/2$, $V_{max}$ étant la vitesse maximale atteignable par le véhicule 1. Elle est ensuite linéaire de manière à s'annuler en Vmax.

La loi de commande 8 a pour fonction de calculer $Kv(\alpha)$ et $K(V)$. Ces valeurs sont transmises à une loi géométrique 9 qui détermine pour chaque roue 3 une vitesse de consigne $V_c$ à appliquer pour réaliser la commande de direction par ripage 7 souhaitée. Pour cela la loi géométrique 9 calcule un ratio final de vitesse différentielle Kvf selon la formule suivante:

$$Kvf = 1 + K(Kv - 1)$$

en fonction de Kv ratio de vitesse différentielle et de K ratio de modulation de ripage précédemment calculés par la loi de commande 8. Ensuite ce ratio Kvf est utilisé pour calculer une vitesse de consigne $V_c$ par côté du véhicule 1.

Dans le mode de réalisation de la revendication 1, à savoir le pilotage en couple, la loi géométrique 9 est appliquée comme suit. Pour les roues d'un premier côté du véhicule 1 la vitesse de consigne $V_{c1}$ est calculée selon la

formule  $V_{c1} = \dfrac{2}{1 + Kvf} V$ .  Pour les roues du second côté du véhicule 1 la vitesse de consigne $V_{c2}$ est calculée selon la formule $V_{c2} = \dfrac{2Kvf}{1 + Kvf} V$. V est dans les deux formules la vitesse du véhicule 1 telle que mesurée dans la première étape de la méthode avec les autres grandeurs d'entrée.

Dans le mode de réalisation de la revendication 2, à savoir le pilotage en vitesse, la loi géométrique 9 est appliquée comme suit. Pour les roues d'un premier côté du véhicule 1 la vitesse de consigne $V_{c1}$ est calculée selon la formule $V_{c1} = \dfrac{2}{1 + Kvf} V_{mc}$. Pour les roues du second côté du véhicule 1 la vitesse de consigne $V_{c2}$ est calculée selon la formule $V_{c2} = \dfrac{2Kvf}{1 + Kvf} V_{mc}$. $V_{mc}$ est la vitesse de mode commun telle que déterminée par l'interface 12 dans la seconde étape de la méthode selon l'invention. Les formules utilisées sont identiques aux précédentes en substituant ici $V_{mc}$ à V.

La loi géométrique 9 telle que décrite dans les deux descriptions précédentes détermine une vitesse unique pour toutes les roues 3 d'un même côté du véhicule 1. Elle détermine donc deux vitesses $V_{c1}$ et $V_{c2}$. Une telle méthode fonctionne, mais présente l'inconvénient de ne pas être correspondre à la réalité du contact roue/terrain. En virage un véhicule présente des différences de vitesses entre les roues avant et arrière. En forçant toutes les roues d'un même côté à la même vitesse on crée des contraintes qui sont absorbées soit par le terrain s'il n'est pas trop adhérent, soit par une usure prématurée des pneumatiques. Une alternative intéressante et qui corrige cet inconvénient consiste à individuer chaque roue. Pour cela on utilise les même formules de la loi géométrique 9, mais pour chaque roue est calculée une vitesse propre. Pour cela les mêmes formules sont utilisés en remplaçant la vitesse V du véhicule 1 par une vitesse $V_e$ de l'essieu auquel appartient la roue 3. Comme il a été vu précédemment, chaque roue 3 motrice étant indépendante, la notion d'essieu est fictive en l'absence d'un axe reliant les deux roues 3. Cependant il est possible d'apparier les roues 3 se faisant face deux à deux au sein d'un essieu « virtuel ». La vitesse $V_e$ de cet essieu est alors déterminée parmoyennage des deux vitesses de chacune des roues 3 composant cet « essieu ». On applique ensuite pour chaque roue 3 la formule correspondant à son côté de véhicule 1 en utilisant la vitesse $V_e$ de l'essieu comprenant cette roue 3.

Que ce soit dans le cadre du calcul d'une vitesse par côté de véhicule ou d'une vitesse individuée par roue, il est possible, en lieu et place des formules précédentes, d'utiliser une table de correspondance 18 fournissant une vitesse de consigne $V_c$ en fonction des données d'entrée K, Kv, V, $V_{mc}$ ou $V_e$. On utilise alors une table de correspondance 18 par côté du véhicule ou une table de correspondance 18 par roue.

Ces tables de correspondance 18 sont des matrices tridimensionnelles contenant les valeurs de $V_c$ en fonction des trois paramètres d'entrée K, Kv et V, $V_{mc}$ ou Ve. Ces tables de correspondances 18 sont pré-établies selon plusieurs techniques. Elles peuvent être remplies en utilisant les équations ou formules théoriques précédemment décrites.

Il est aussi possible de remplir les matrices de ces tables de correspondance 18 de manière empirique en déterminant les valeurs par des essais ou par des simulations.

Il est aussi possible à partir de matrices obtenues par application des équations théoriques, d'adapter tout ou partie des valeurs en fonction de résultats d'essai ou de simulation.

Les moteurs de roue 5 sont commandés par un courant I. Ce courant est proportionnel au couple développé par le moteur 5. Les moteurs de roue 5 nécessitent pour leur commande un couple de consigne $C_c$. A partir des vitesses de consignes $V_c$, il est nécessaire de déterminer ce couple de consigne $C_c$. Ceci est réalisé dans la méthode selon l'invention par le module asservissement de vitesse 10 et particulièrement par le contrôleur 11 qu'il comporte.

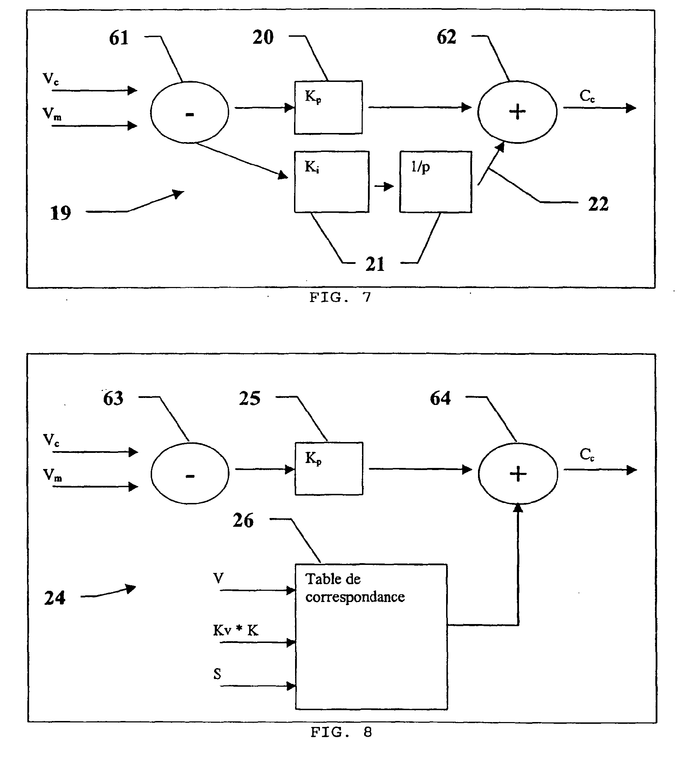

Selon un premier mode de réalisation, ce contrôleur est réalisé par un contrôleur de type proportionnel intégral. Un tel contrôleur est classique et bien connu de l'homme de l'art. La figure 7 illustre un tel contrôleur. Sur cette figure 7 un tel contrôleur proportionnel intégral 19 ou PI est figuré. Sur la gauche de la figure apparaissent les grandeurs d'entrée à savoir une vitesse de consigne $V_c$ et une vitesse mesurée $V_m$. Cette vitesse est la vitesse effective de la roue 3 considérée. Ces deux grandeurs sont comparées par un comparateur 61 qui soustrait l'une des grandeurs à l'autre. La différence ainsi obtenue encore nommée écart ou erreur de l'asservissement est ensuite traitée dans deux branches parallèles : une branche proportionnelle et une branche intégrale. Sur la branche proportionnelle, l'erreur est multipliée par un coefficient scalaire constant Kp dans un bloc proportionnel 20 pour produire une composante proportionnelle. Sur la branche intégrale, l'erreur est multipliée par un coefficient scalaire constant Ki dans un premier bloc et intégrée (fonction 1/p) dans un second bloc 21 en série avec le premier pour produire une composante intégrale 22. La consigne de couple Cc est obtenue en sortie du contrôleur 19 par ajout des composantes proportionnelle et intégrale 22 dans un bloc sommateur 62. Un tel contrôleur 19 proportionnel intégral se règle en adaptant les deux coefficients Kp et Ki selon des méthodes théoriques ou empiriques connues de l'homme de l'art.

Avantageusement, afin d'éviter d'accumuler des erreurs, la composante intégrale, qui du fait de l'intégration conserve une mémoire d'état d'une utilisation à l'autre, est réinitialisée par une remise à zéro de son historique lorsque la direction par ripage est arrêtée. Un tel arrêt se produit, par exemple, lorsque le véhicule repasse par la ligne droite et que l'angle de braquage volant α change de signe ou encore lorsque la fonction d'étouffement K devient nulle.

Avantageusement encore un module anti-windup 23 complète le contrôleur proportionnel intégral 19 et intervient en cas de saturation du couple de consigne $C_c$. Il est possible que le calcul précédemment décrit produise un couple de consigne $C_c$ calculé supérieur (en valeur absolue) à une capacité maximale $C_{fmax}$ du moteur de roue 5. Afin de ne pas transmettre au moteur 5 une telle consigne qu'il ne pourrait pas exécuter, la consigne de couple $C_c$ est réduite en inhibant la composante intégrale 22, c'est à dire en la réduisant autant que de besoin. Ainsi si pour un moteur 5 un couple de consigne $C_c$ dépassant $C_{fmax}$ d'une quantité D est calculé, tous les couples de consignes $C_c$ de tous les moteurs roues 5 sont réduits de cette quantité D.

Selon un mode de réalisation alternatif, le contrôleur 11 est du type 24 proportionnel complété par un estimateur de couple. Un tel contrôleur 24 est illustré par la figure 8. Sur la gauche de la figure apparaissent les grandeurs d'entrée à savoir une vitesse de consigne $V_c$ et une vitesse mesurée $V_m$. Cette vitesse est la vitesse effective la roue 3 considérée. Ces deux grandeurs sont comparées par un comparateur 63 qui soustrait l'une des grandeurs à l'autre. La différence ainsi obtenue encore nommée écart ou erreur de l'asservissement est ensuite traitée dans une branche proportionnelle où l'erreur est multipliée par un coefficient scalaire constant Kp dans un bloc proportionnel 25 pour produire une composante proportionnelle. Parallèlement, un estimateur de couple 26 détermine une estimation du couple résistant du sol sur la roue considérée 3. Ce couple est estimé au moyen d'une table correspondance en fonction des entrées vitesse du véhicule V, ratio de vitesse K*Kv et de la stratégie S. La stratégie S est ici indicative de l'adhérence du sol. Une telle table de correspondance est établie pour chaque côté du véhicule. Les valeurs contenues dans ces tables sont obtenues par des simulations comportementales de la roue 3 au contact du sol, réalisée en régime établi. Le couple résistant ainsi estimé par l'estimateur 26 est ajouté à la composante proportionnelle par le sommateur 64 afin de produire le couple de consigne $C_c$.

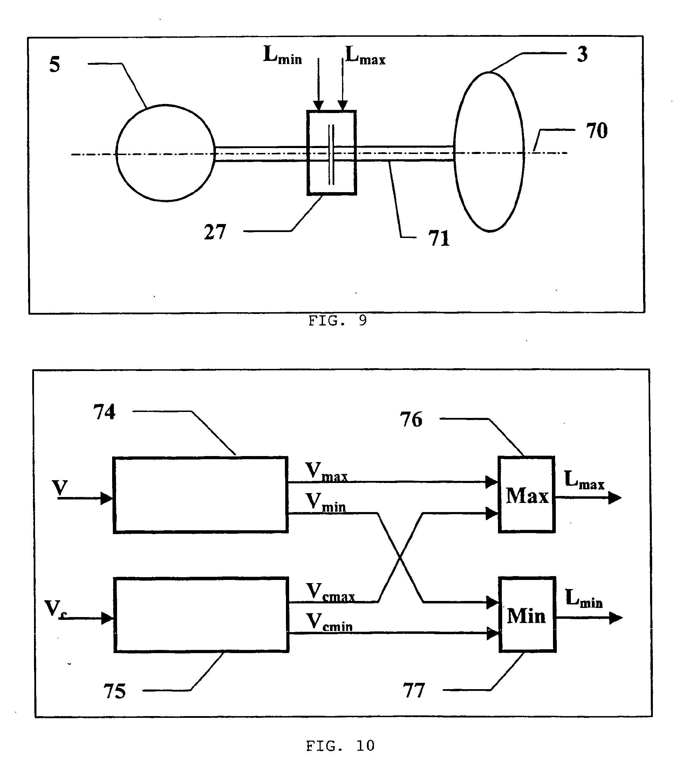

Afin de renforcer l'efficacité de la méthode selon l'invention, il est avantageux de prévoir pour chaque roue 3 un module anti-dépassement 27. La vitesse de consigne $V_c$ est transformée par l'asservissement 10 en un couple de consigne $C_c$. Ce couple de consigne $C_c$ est appliqué au moteur 5 pour tenter d'obtenir une vitesse de roue égale à $V_c$. Cependant des perturbations dus par exemple au terrain peuvent entraîner des dépassements de cette vitesse. Afin d'éviter ces dépassements un module anti-dépassement 27 est avantageusement intercalé entre le moteur de roue 5 et la roue motrice 3. La figure 9 montre un exemple de réalisation d'un tel module anti-dépassement 27. Un tel module 27 est placé sur l'axe 70 reliant le moteur 5 à la roue 3 et coupe la transmission 71. Ce module 27 agit comme un embrayage commandé par deux vitesses limites Lmin et Lmax. Tant que la vitesse $V_r$ de la roue 3 reste comprise entre Lmin et Lmax, le module 27 transmet le couple de transmission entre le moteur 5 et la roue 3. Si la vitesse $V_r$ de la roue 3 vient à être supérieure à Lmax ou inférieure à Lmin, le module 27 interrompt la transmission du couple. La limite Lmax intervient pour les couples positifs, c'est à dire en accélération et la limite Lmin pour les couples négatifs, c'est à dire en freinage. Un mode préférentiel consiste à utiliser la vitesse de consigne $V_c$ précédemment déterminée comme limite. On utilise alors Lmax = valeur absolue ($V_c$) et Lmin = - valeur absolue ($V_c$).

Selon un mode de réalisation préférentiel le module anti-dépassement 27 de la vitesse comprend un moteur contrôleur 28 du type de ceux utilisés pour le contrôle du dispositif ABS/ASR. Un tel moteur contrôleur peut, en fonction de vitesses limites Lmin et Lmax, agir comme un embrayage et transmettre ou non le couple. Un tel moteur 28 intègre un contrôleur qui assure son pilotage en fonction de Lmin, Lmax et de la vitesse $V_r$ de la roue 3. Ce contrôleur peut agir tel un embrayage en mode tout ou rien, le moteur transmettant soit tout le couple, soit aucun couple. Il peut aussi, afin de présenter une caractéristique continue, être piloté par un asservissement à très fort gain.

Classiquement, sur un tel véhicule 1 à roues motrices 3 indépendantes, chaque roue 3 est équipée d'un dispositif ABS/ASR comprenant un moteur contrôleur 29. Avantageusement il est possible de confondre le moteur contrôleur de l'anti-dépassement 28 avec celui préexistant de l'ABS/ASR 29. Afin de dissocier les deux utilisations qui correspondent à des vitesses limites différentes, il est nécessaire de réaliser une commutation entre ces deux utilisations. Avantageusement cette commutation est réalisée par une fonction de type MIN/MAX 31. Une telle fonction est illustrée par la figure 10. Cette fonction comporte un premier bloc 74 qui détermine en fonction de la vitesse V du véhicule, une vitesse maximale $V_{max}$ et une vitesse minimale $V_{min}$. Ce premier bloc 74 détermine les vitesses limites pour la fonction ABS/ASR. Un second bloc 75 effectue la même opération pour la vitesse de consigne $V_c$ et détermine une vitesse de consigne maximale $V_{cmax}$ et une vitesse de consigne minimale $V_{cmin}$. Ce second bloc 75 détermine les vitesses limites pour la fonction anti-dépassement. Ensuite la commutation ente les deux fonctions est effectuée par l'intermédiaire de deux blocs : un bloc Max 76 et un bloc Min 77. Le bloc Max 76 détermine la limite de vitesse maximale $L_{max}$ en retenant la plus grande valeur entre $V_{max}$ et $V_{cmax}$. Le bloc Min 77 détermine la limite de vitesse minimale $L_{min}$ en retenant la plus petite valeur entre $V_{min}$ et $V_{cmin}$. Ces deux valeurs $L_{max}$ et $L_{min}$ sont ensuite transmises en entrée du moteur contrôleur 28, 29.

La seconde étape de la méthode selon l'invention diffère légèrement selon qu'il s'agit d'un pilotage en couple ou d'un pilotage en vitesse. Cette seconde étape consiste à déterminer en fonction de la consigne d'accélération ou d'avancement γ et de l'éventuelle consigne de freinage F, une consigne de mode commun. Si l'on pilote en couple cette consigne est un couple de mode commun $C_{mc}$, si l'on pilote en vitesse cette consigne est une vitesse de mode commun $V_{mc}$. Ce calcul est effectué par un module d'interface 12 et peut être identique dans les deux types de pilotage. Ce module applique une fonction d'interface aux grandeurs d'entrée γ et éventuellement F interprétant la volonté du conducteur en terme d'avancement. Le tableau de bord conducteur peut ne comporter qu'une unique commande d'avancement 42, par exemple une pédale d'accélérateur fournissant via un capteur 52 une mesure γ et cette dernière peut être directement utilisée comme valeur d'entrée $C_{mc}$ ou $V_{mc}$. Alternativement le module d'interface 12 peut introduire une fonction bijective de modification afin d'intégrer des éléments ergonomiques. Le tableau de bord peut aussi, afin de rester homogène à un tableau de bord classique et ne pas perturber le conducteur dans ses habitudes, comporter une commande d'accélérateur 42 et une commande de frein 43 fournissant une mesure F via un capteur 53. Dans ce cas le module interface 12 détermine une unique grandeur d'avancement en fonction des deux mesures γ et F. Cette fonction peut être aussi simple qu'une soustraction, la consigne d'avancement de mode commun $C_{mc}$ ou $V_{mc}$ étant prise égale à γ - F. Une autre possibilité est de retenir une consigne égale à γ, tant que la commande de frein 43 n'est pas sollicitée et égale à -F dès que cette mesure n'est plus nulle. Toute autre combinaison de γ et F est utilisable. Il est ainsi possible de proposer au conducteur un comportement similaire à l'ergonomie d'un véhicule classique à deux organes de commande accélérateur et frein.

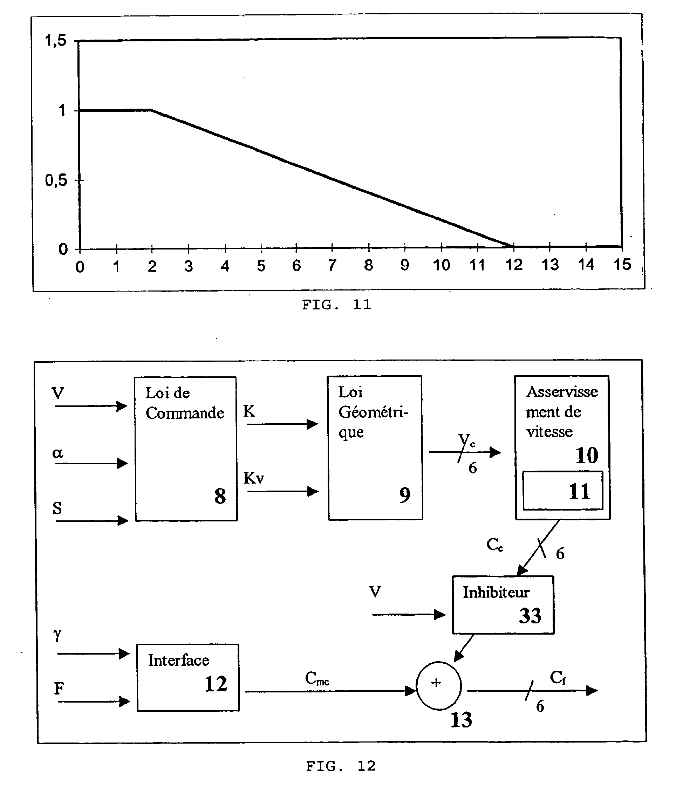

Le ratio K de modulation de ripage est utilisé comme vu précédemment pour atténuer, au niveau de la détermination des consignes, l'influence du ripage lorsque la vitesse V augmente. Afin de renforcer cet effet d'atténuation de l'influence de la commande de direction par ripage 7, il est avantageux de multiplier les consignes de couple $C_c$ issues des modules d'asservissement 10 par une fonction d'atténuation ou d'étouffement A. Cette fonction A de la variable vitesse du véhicule V est illustrée par la figure 11. Il s'agit d'une fonction de mêmes caractéristiques que la fonction K(V). Elle vaut 1 à vitesse nulle, 0 à vitesse maximale et est décroissante entre ces deux vitesses. Elle peut être avantageusement identique à la fonction utilisée pour K(V). Avantageusement cette fonction A(V) présente un premier palier de valeur 1 avant de décroître linéairement pour se poursuivre constante sur un second palier de valeur 0.

Cette fonction d'atténuation est mise en oeuvre au sein d'un module inhibiteur 33. La figure 12 illustre le schéma global de la méthode selon un pilotage en couple avec un tel module inhibiteur 33 intercalé entre le module asservissement de vitesse 10 et le sommateur 13. Ce module reçoit en entrée la mesure de la vitesse V du véhicule.

La méthode de contrôle commande selon l'invention dans le cas d'un pilotage en couple, comprend un sommateur 13. Ce sommateur 13 additionne un couple de consigne $C_c$ pour chaque roue avec un couple de mode commun $C_{mc}$ pour obtenir un couple final $C_f$ pour chaque roue 3. Le couple $C_c$ est lié à la commande de direction par ripage et le couple $C_{mc}$ est lié à la commande d'avancement. Il est possible, ces deux contributions étant indépendantes, que leur addition produise un couple final dépassant, en valeur absolue, la capacité maximale $C_{fmax}$ du moteur de roue 5. Ce dépassement de capacité ou saturation est préjudiciable. Pour l'éviter plusieurs approches sont possibles. Une première approche consistant à limiter $C_{mc}$ privilégie la direction : on parle de priorité à la direction. Une seconde approche diamétralement opposée consiste à limiter $C_c$ et à privilégier l'avancement : on parle de priorité à l'avancement. Une troisième approche intermédiaire consiste à diminuer à la fois $C_c$ et $C_{mc}$.

Lorsque la priorité est donnée à l'avancement, les consignes de couple $C_c$ sont limitées afin de ne pas dépasser $C_{fmax}$ - Max ($C_{mc}$), Max ($C_{mc}$) étant la valeur maximale du couple de mode commun possible. Si une des consignes de couple $C_c$ tend à dépasser cette grandeur, les consignes de couples $C_c$ de toutes les roues 3 sont diminuées d'une mesure égale. Cette limitation s'effectue en valeur absolue et on limite le couple de consigne $C_c$ du moteur le plus critique, par $C_{fmax}$ - Max ($C_{mc}$) en positif et par -$C_{fmax}$ + Min ($C_{mc}$) en négatif.

De manière analogue lorsque la priorité est donnée à la direction, la consigne de couple de mode commun $C_{mc}$ est limitée afin de ne pas dépasser en positif $C_{fmax}$ - Max ($C_c$), Max ($C_c$) étant la valeur maximale du couple de consigne de direction possible, et en négatif -$C_{fmax}$ + Min ($C_c$).

Une méthode intermédiaire entre la priorité à la direction et la priorité à l'avancement est la priorité à la direction avec avancement minimum garanti. Dans cette méthode la consigne de couple de mode commun $C_{mc}$ est limitée afin de ne pas dépasser en positif $C_{fmax}$ - Max ($C_c$), Max ($C_c$) étant la valeur maximale du couple de consigne de direction possible, et en négatif -$C_{fmax}$ + Min ($C_c$), comme dans le cas de la priorité à la direction. Cependant, afin de garantir un couple de mode commun minimum $C_{mcmg}$, cette limite ne peut devenir inférieure à une valeur minimale $C_{mcmg}$. Aussi les consignes de couple $C_c$ sont limitées afin de ne pas dépasser $C_{fmax}$ - $C_{mcmg}$ en positif et - $C_{fmax}$ + $C_{mcmg}$. Si une des consignes de couple $C_c$ tend à dépasser cette grandeur, les consignes de couples $C_c$ de toutes les roues 3 sont diminuées dans une mesure égale.

Ainsi dans tous les cas la valeur du couple final $C_f$, pour toutes les roues 3, ne peut dépasser $C_{fmax}$ en positif (ou devenir inférieure à -$C_{fmax}$).

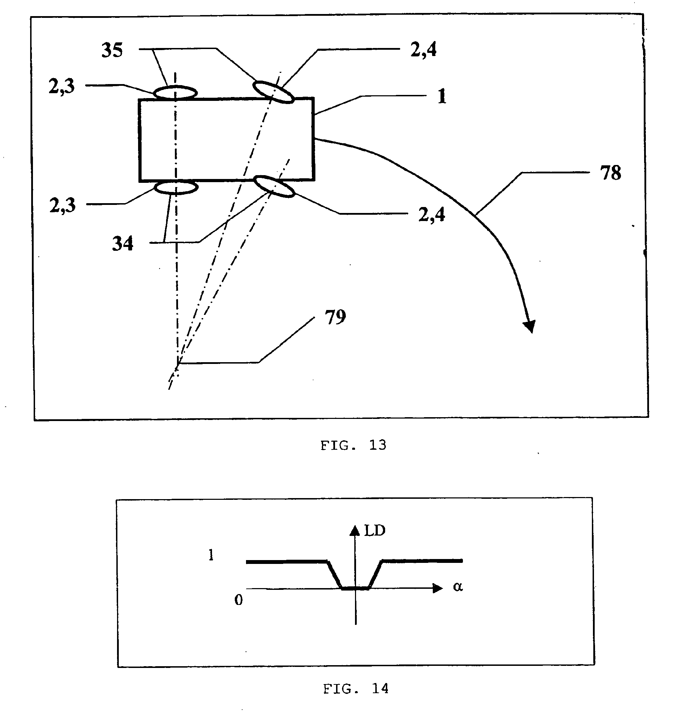

Un correctif optionnel peut être appliqué. On considère comme le montre la figure 13 un véhicule 1 en cours de réalisation d'un virage. Ce véhicule 1 suit une trajectoire 78. Il tourne à un instant donné autour d'un centre instantané de rotation 79. Le sens de rotation détermine un côté du véhicule 1 qui est intérieur au virage et l'autre côté qui est extérieur au virage. Ainsi dans l'exemple de la figure 13 ou le véhicule effectue un virage à droite, les roues 34 sont intérieures au virage alors que les roues 35 sont extérieures au virage. Dans le cas d'un virage à gauche ces qualificatifs s'inverseraient. Le correctif proposé consiste à n'appliquer que des couples de consigne $C_c$ positifs aux roues extérieures 35 et des couples de consigne $C_c$ négatifs aux roues intérieures. Pour cela si l'asservissement de vitesse 10 produit un couple de consigne $C_c$ négatif pour une roue extérieure 35 ce dernier est annulé. De même si l'asservissement de vitesse 10 produit un couple de consigne $C_c$ positif pour une roue intérieure 34 ce dernier est annulé.

La direction par ripage au voisinage de la ligne droite, c'est à dire pour un angle de braquage volant $\alpha$ proche de 0 peut être perturbatrice pour le comportement du véhicule 1. Aussi selon un mode de réalisation préférentiel la composante de couple de direction de ripage est supprimée au voisinage de la ligne droite. Pour cela, la consigne de couple $C_c$ en sortie de l'asservissement de vitesse 10 est multipliée par une fonction LD. Une telle fonction LD est illustrée par la figure 14. Cette fonction LD de la variable angle de braquage $\alpha$ vaut 1 sur la presque totalité du domaine de définition. Autour de $\alpha = 0$, sur un petit intervalle avantageusement centré, cette fonction LD s'annule. Préférentiellement le raccordement entre la valeur 0 et la valeur 1 s'effectue de manière continue ainsi la déconnexion de la commande de ripage s'effectue continûment. La fonction LD est préférentiellement paire.

L'invention concerne aussi tout véhicule utilisant ou mettant en oeuvre une méthode selon l'une des caractéristiques décrites ci-dessus.

**Revendications**

1. Méthode de contrôle commande de direction mixte, applicable à un véhicule (1) comprenant au moins deux roues (2) motrices (3), situées chacune d'un des côtés du véhicule, motorisées chacune indépendamment par un moteur électrique (5) et au moins une roue (2) directrice (4), **caractérisée en ce que** ladite méthode en superpose une commande de direction par ripage (7) obtenue en appliquant une consigne de vitesse $V_c$ différente aux roues (3) d'un côté du véhicule (1) et aux roues (3) de l'autre côté à une commande de direction classique par braquage de la roue directrice (4), pour un pilotage en couple, comportant les étapes suivantes :

   - détermination des grandeurs d'entrée :

      o mesure ou calcul de la vitesse V du véhicule,
      o mesure de l'angle $\alpha$ de braquage volant,
      o mesure de la position $\gamma$ de la commande d'accélérateur 42,
      o mesure de la position F d'une éventuelle commande de frein 43,

   - détermination par un module d'interface (12) de la consigne de couple de mode commun $C_{mc}$,
   - détermination de consignes de vitesse $V_c$ en appliquant une fonction de calcul (6) aux grandeurs d'entrée,
   - calcul de consignes de couple $C_c$ par un asservissement de vitesse (10) comportant un contrôleur (11) s'asservissant sur les consignes de vitesse $V_c$,
   - calcul des consignes de couple final $C_f$ applicables à chaque moteur (5) de roue (2) par un sommateur (13) ajoutant la consigne de couple de mode commun $C_{mc}$ et les consignes de couple $C_c$.

2. Méthode de contrôle commande de direction mixte, applicable à un véhicule (1) comprenant au moins deux roues (2) motrices (3), situées chacune d'un des côtés du véhicule, motorisées chacune indépendamment par un moteur électrique (5) et au moins une roue (2) directrice (4), **caractérisée en ce que** ladite méthode en superpose une commande de direction par ripage (7) obtenue en appliquant une consigne de vitesse $V_c$ différente aux roues (2) d'un côté du véhicule (1) et aux roues (2) de l'autre côté à une commande de direction classique par braquage de la roue (2) directrice (4), pour un pilotage en vitesse, comportant les étapes suivantes :

   - détermination des grandeurs d'entrée :

      o mesure ou calcul de la vitesse V du véhicule,
      o mesure de l'angle $\alpha$ de braquage volant,
      o mesure de la position $\gamma$ de la commande d'accélérateur 42,
      o mesure de la position F d'une éventuelle commande de frein 43,

   - détermination par un module d'interface (12) de la consigne de vitesse de mode commun $V_{mc}$,
   - détermination des consignes de vitesse $V_c$ en appliquant une fonction de calcul (6) aux grandeurs d'entrée et à la vitesse de mode commun $V_{mc}$,

**EP 1 614 608 B1**

- calcul des consignes de couple final $C_f$, applicables à chaque moteur (5) de roue (2), par un asservissement de vitesse (10) comportant un contrôleur (11) s'asservissant sur les consignes de vitesse $V_c$.

**3.** Méthode de contrôle commande de direction mixte selon la revendication 1 ou 2, **caractérisée en ce que** la fonction de calcul (6) et l'étape de détermination des consignes de vitesse $V_c$ se décomposent en :

- calcul d'un ratio K de modulation de ripage et d'un ratio Kv de vitesse différentielle en appliquant une loi de commande (8) aux grandeurs d'entrée,
- détermination des consignes de vitesse $V_c$ en appliquant une loi géométrique (9) à Kv et K.

**4.** Méthode de contrôle commande de direction mixte selon l'une quelconque des revendications 1 à 3, **caractérisée en ce que** la première étape de détermination des grandeurs d'entrée inclut une mesure ou une détermination automatique d'un paramètre stratégie S et **en ce que** ce paramètre détermine la loi de commande (8) utilisée pour l'étape de calcul des ratios K et Kv.

**5.** Méthode de contrôle commande de direction mixte selon l'une quelconque des revendications 1 à 4, **caractérisée en ce que** la loi de commande (8) calcule le ratio Kv de vitesse différentielle par une fonction Kv($\alpha$) continue bijective de la variable angle de braquage $\alpha$, vérifiant sensiblement, pour tout angle de braquage $\alpha$ de son domaine, l'égalité Kv($-\alpha$) = 1/Kv($\alpha$).

**6.** Méthode de contrôle commande de direction mixte selon la revendication 5, **caractérisée en ce que** les valeurs de Kv($\alpha$) sont calculées par une fonction polynomiale (15) de la variable angle de braquage $\alpha$.

**7.** Méthode de contrôle commande de direction mixte selon la revendication 5 ou 6, **caractérisée en ce que** les valeurs de Kv($\alpha$) sont déterminées par une table de correspondance (16).

**8.** Méthode de contrôle commande de direction mixte selon l'une quelconque des revendications 1 à 7, **caractérisée en ce que** la loi de commande (8) calcule le ratio K de modulation de ripage par une fonction K(V) continue et décroissante de la variable vitesse V du véhicule (1), qui prend la valeur 1 lorsque la vitesse est nulle et la valeur 0 lorsque la vitesse est maximale.

**9.** Méthode de contrôle commande de direction mixte selon la revendication 8, **caractérisée en ce que** la fonction K(V) est constante sur un premier palier de valeur 1 avant de décroître linéairement pour se poursuivre constante sur un second palier de valeur 0.

**10.** Méthode de contrôle commande de direction mixte selon l'une quelconque des revendications 1 et 3 à 9, **caractérisée en ce que** la loi géométrique (9) calcule une consigne de vitesse $V_c$ par côté du véhicule (1) respectivement pour un des côtés du véhicule selon la formule $V_{c1} = \dfrac{2}{1 + Kvf} V$ et pour l'autre côté du véhicule selon la formule

$V_{c2} = \dfrac{2Kvf}{1 + Kvf} V$ , avec $Kvf = 1 + K(Kv-1)$, K étant le ratio de modulation de ripage, Kv le ratio de vitesse différentielle et V la vitesse du véhicule.

**11.** Méthode de contrôle commande de direction mixte selon l'une quelconque des revendications 2 à 9, **caractérisée en ce que** la loi géométrique (9) calcule une consigne de vitesse $V_c$ par côté du véhicule (1) respectivement pour un des côtés du véhicule selon la formule $V_{c1} = \dfrac{2}{1 + Kvf} V_{mc}$ et pour l'autre côté du véhicule selon la formule

$V_{c2} = \dfrac{2Kvf}{1 + Kvf} V_{mc}$ , avec $Kvf = 1 + K(Kv - 1)$, K étant le ratio de modulation de ripage, Kv le ratio de vitesse différentielle et $V_{mc}$ la consigne de vitesse de mode commun.

**12.** Méthode de contrôle commande de direction mixte selon l'une quelconque des revendications 1 et 3 à 9, **caracté-**

**risée en ce que** la loi géométrique (9) calcule une consigne de vitesse $V_c$ par roue (3) respectivement pour un des côtés du véhicule selon la formule $V_{c1} = \dfrac{2}{1 + Kvf} V_e$ et pour l'autre côté du véhicule selon la formule

$V_{c2} = \dfrac{2Kvf}{1 + Kvf} V_e$, avec $Kvf = 1 + K(Kv\text{-}1)$, K étant le ratio de modulation de ripage, Kv le ratio de vitesse différentielle et $V_e$ la vitesse moyenne de l'essieu portant la roue (3) considérée.

13. Méthode de contrôle commande de direction mixte selon l'une quelconque des revendications 1 à 12, **caractérisée en ce que** la loi géométrique (9) détermine une consigne de vitesse $V_c$ respectivement par côté du véhicule (1) ou par roue (3) en fonction d'une table de correspondance (18) préétablie respectivement par côté du véhicule ou par roue.

14. Méthode de contrôle commande de direction mixte selon la revendication 13, **caractérisée en ce que** la table de correspondance (18) de la loi géométrique (9) est construite sur la base des équations théoriques.

15. Méthode de contrôle commande de direction mixte selon la revendication 13 ou 14, **caractérisée en ce que** la table de correspondance (18) de la loi géométrique (9) est construite ou adaptée sur la base de résultats empiriques.

16. Méthode de contrôle commande de direction mixte selon l'une quelconque des revendications 1 à 15, **caractérisée en ce que** le contrôleur (11) est du type proportionnel intégral (19).

17. Méthode de contrôle commande de direction mixte selon la revendication 16, **caractérisée en ce que** la composante intégrale (22) est réinitialisée lors d'un arrêt de la commande de direction par ripage (7).

18. Méthode de contrôle commande de direction mixte selon la revendication 16 ou 17, **caractérisée en ce qu'**un module anti-windup (23), intégré au contrôleur (11), inhibe la composante intégrale (22) en cas de saturation de la consigne de couple ($C_c$).

19. Méthode de contrôle commande de direction mixte selon l'une quelconque des revendications 1 à 15, **caractérisée en ce que** le contrôleur (11) est du type proportionnel complété par un estimateur de couple (24).

20. Méthode de contrôle commande de direction mixte selon l'une quelconque des revendications 1 et 3 à 19, **caractérisée en ce qu'**elle comporte, pour chaque roue (3), un module anti-dépassement (27) de la consigne de vitesse $V_c$, recevant en entrée une limite de vitesse minimale $L_{min}$ et une limite de vitesse maximale $L_{max}$, prises égales en valeur absolue à la consigne de vitesse $V_c$, entre lesquelles ce module maintient la vitesse $V_r$ de la roue (3), en supprimant la transmission du couple final $C_f$ en cas de dépassement.

21. Méthode de contrôle commande de direction mixte selon la revendication 20, **caractérisée en ce que** le module anti-dépassement (27) utilise un moteur contrôleur (28) de type ABS/ASR pour annuler le couple final $C_f$ et **en ce qu'**il pilote le moteur (28), soit en tout ou rien, soit selon un asservissement à très fort gain.

22. Méthode de contrôle commande de direction mixte selon la revendication 21, **caractérisée en ce que** le moteur contrôleur (28) est confondu avec un moteur contrôleur (29) présent dans un dispositif ABS/ASR du véhicule (1) et **en ce qu'**une fonction de type MIN/MAX (31) entre la vitesse du véhicule V et la consigne de vitesse $V_c$, est appliquée pour déterminer la limite de vitesse minimale $L_{min}$ et la limite de vitesse maximale $L_{max}$ en entrée du module anti-dépassement (27), afin de réaliser une commutation entre la fonction ABS/ASR et la fonction anti-dépassement.

23. Méthode de contrôle commande de direction mixte selon l'une quelconque des revendications 1 et 3 à 22, **caractérisée en ce que** la consigne de couple de mode commun $C_{mc}$ est déterminée en fonction de la position $\gamma$ de la commande d'accélérateur (42) et de la position F de la commande de frein (43).

24. Méthode de contrôle commande de direction mixte selon l'une quelconque des revendications 2 à 22, **caractérisée en ce que** la consigne de vitesse de mode commun $V_{mc}$ est déterminée en fonction de la position $\gamma$ de la commande d'accélérateur (42) et de la position F de la commande de frein (43).

**25.** Méthode de contrôle commande de direction mixte selon l'une quelconque des revendications précédentes, **caractérisée en ce que** la consigne de couple $C_c$ déterminée par le contrôleur (11) est multipliée par une fonction A de la variable vitesse V du véhicule, décroissante, valant 1 à vitesse nulle et 0 à vitesse élevée, afin de progressivement atténuer l'influence de la commande de direction par ripage (7) lorsque la vitesse V du véhicule (1) augmente.

**26.** Méthode de contrôle commande de direction mixte selon la revendication 25, **caractérisée en ce que** la fonction A(V) est constante sur un premier palier de valeur 1 avant de décroître linéairement pour se poursuivre constante sur un second palier de valeur 0.

**27.** Méthode de contrôle commande de direction mixte selon l'une quelconque des revendications 1 et 3 à 26, **caractérisée en ce que** les couples de consigne $C_c$ sont tous réduits d'une même valeur (37) telle que le couple de consigne $C_c$ pour le moteur le plus critique reste inférieur à $C_{fmax}$ - Max $(C_{mc})$ et supérieur à - $C_{fmax}$ + Min $(C_{mc})$ pour conférer une priorité à l'avancement.

**28.** Méthode de contrôle commande de direction mixte selon l'une quelconque des revendications 1 et 3 à 26, **caractérisée en ce que** le couple de mode commun $C_{mc}$ est limité pour rester inférieur à $C_{fmax}$ - Max $(C_c)$ et supérieur à - $C_{fmax}$ + Min $(C_c)$ pour conférer une priorité à la direction.

**29.** Méthode de contrôle commande de direction mixte selon la revendication 28, **caractérisée en ce que** les couples de consigne $C_c$ sont tous réduits d'une même valeur (37) telle que la limitation positive du couple de mode commun $C_{fmax}$ - Max $(C_c)$ reste supérieure à une valeur minimale garantie $C_{mcmg}$ du couple de mode commun $C_{mc}$ et respectivement que la limitation négative du couple de mode commun - $C_{fmax}$ + Min $(C_c)$ reste inférieure à une valeur minimale garantie - $C_{mcmg}$ du couple de mode commun $C_{mc}$, pour conférer une priorité à la direction avec avancement minimum garanti.

**30.** Méthode de contrôle commande de direction mixte selon l'une quelconque des revendications précédentes, **caractérisée en ce que**, en sortie de l'asservissement de vitesse (10), la consigne de couple $C_c$ est annulée si elle est positive pour une roue (2) intérieure (34) relativement au virage ou si elle est négative pour une roue (2) extérieure (35) relativement au virage.

**31.** Méthode de contrôle commande de direction mixte selon l'une quelconque des revendications précédentes, **caractérisée en ce que**, en sortie de l'asservissement de vitesse (10), la consigne de couple $C_c$ est multipliée par une fonction LD continue de la variable angle de braquage $\alpha$ valant 1 sur tout son domaine sauf autour de 0 où elle s'annule, afin de continûment déconnecter la commande de direction par ripage (7) au voisinage de la ligne droite.

**32.** Véhicule utilisant une méthode de contrôle commande de direction mixte selon l'une quelconque des revendications précédentes.

**Claims**

**1.** A mixed steering control method, applicable to a vehicle (1) comprising at least two drive (3) wheels (2), each located on one of the vehicle's sides, each independently driven by an electric motor (5) and at least one guide wheel (4), wherein said method superimposes a skid steering system (7) obtained by applying a different speed set-point $V_c$ to the wheels (3) on one side of the vehicle (1) and to the wheels (3) on the other side onto a classical steering system obtained by locking the guide wheels (4), for torque steering, which incorporates the following steps:

- determination of the input variables :

    o measurement or calculation of the vehicle's speed V,
    o measurement of the steering lock angle $\alpha$ of the steering wheel
    o measurement of the position $\gamma$ of the accelerator control 42,
    o measurement of the position F of any brake control 43,

    - determination by an interface module (12) of the common mode set-point torque $C_{mc}$,
    - determination of the speed set-points $V_c$ by applying a calculation function (6) to the input variables,
    - calculation of the set-point torques $C_c$ by a speed servo (10) incorporating a controller (11) servo-controlled by the speed set-points $V_c$,

- calculation of the final torque set-points $C_f$ applicable to each wheel motor (5) by a summing element (13) which adds the common mode torque set-point $C_{mc}$ and the torque set-points $C_c$.

2. A mixed steering control method applicable to a vehicle (1) comprising at least two drive (3) wheels (2), each located on one side of the vehicle, each independently driven by an electric motor (5) and at least one guide wheel (4), wherein said method superimposes a skid steering system (7) obtained by applying a different speed set-point $V_c$ to the wheels (2) on one side of the vehicle (1) and to the wheels (2) on the other side onto a classical steering system obtained by locking the guide (4) wheels (2), for speed steering, which incorporates the following steps:

- determination of the input variables :

      o measurement or calculation of the vehicle's speed V,
      o measurement of the steering lock angle $\alpha$ of the steering wheel,
      o measurement of the position $\gamma$ of the accelerator control 42,
      o measurement of the position F of any brake control 43,

- determination by an interface module (12) of the common mode speed set-point $V_{mc}$,
- determination of the speed set-points $V_c$ by applying a calculation function (6) to the input variables and to the common mode speed $V_{mc}$,
- calculation of the final torque set-points $C_f$ applicable to each wheel (2) motor (3) by a speed servo (10) incorporating a controller (11) servo-controlled by the speed set-points $V_c$.

3. A mixed steering control method according to Claim 1 or 2, wherein the calculation function (6) and the step to determine the speed set-points $V_c$ are broken down into:

- calculation of a skid modulation ratio K and a differential speed ratio Kv by applying a control law (8) to the input variables,
- determination of the speed set-points $V_c$ by plying a geometric law (9) to Kv and K.

4. A mixed steering control method according to one of Claims 1 to 3, wherein the first step in determining the input variables includes an automatic measurement or determination of a strategy parameter S and wherein this parameter determines the control law (8) used for the step to calculation ratios K and Kv.

5. A mixed steering control method according to any one of Claims 1 to 4, wherein the control law (8) calculates differential speed ratio Kv by a continuous bijection function Kv($\alpha$) of the steering lock angle $\alpha$, substantially verifying, for any steering lock angle $\alpha$ in its domain, the equality Kv($\alpha$) = 1/Kv($\alpha$).

6. A mixed steering control method according to Claim 5, wherein the values of Kv($\alpha$) are calculated by a polynomial function (15) of the steering lock angle $\alpha$ variable.

7. A mixed steering control method according to Claim 5 or 6, wherein the values of Kv($\alpha$) are determined by a correspondence table (16).

8. A mixed steering control method according to any one of Claims 1 to 7, wherein the control law (8) calculates the skid modulation ratio K by a continuous and decreasing function K(V) of the vehicle's speed variable V, which has the value 1 when the speed is nil and the value 0 when the speed is at its maximum.

9. A mixed steering control method according to Claim 8, wherein the function K(V) is constant over a first plateau of value 1 before linearly decreasing to become constant over a second plateau of value 0.

10. A mixed steering control method according to any one of Claims 1 and 3 to 9, wherein the geometric law (9) calculates a speed set-point $V_c$ for each side of the vehicle (1), respectively for one of the vehicle's sides, according to the

formula $V_{c1} = \dfrac{2}{1 + Kvf} V$ and for the other side of the vehicle, according to the formula $V_{c2} = \dfrac{2Kvf}{1 + Kvf} V$ ,

with $Kvf = 1 + K(Kv - 1)$, K being the skid modulation ratio, Kv the differential speed ratio and V the vehicle's speed.

**11.** A mixed steering control method according to any one of Claims 2 to 9, wherein the geometric law (9) calculates a speed set-point $V_c$ for each side of the vehicle (1), respectively for one of its sides, according to the formula

$$V_{c1} = \frac{2}{1 + Kvf} V_{mc}$$ and for the other side of the vehicle, according to the formula $$V_{c2} = \frac{2Kvf}{1 + Kvf} V_{mc},$$

with $Kvf = 1+K(Kv-1)$, K being the skid modulation ratio, Kv the differential speed ratio and $V_{mc}$ the common mode speed set-point.

**12.** A mixed steering control method according to any one of Claims 1 and 3 to 9, wherein the geometric law (9) calculates a speed set-point Vc for each wheel (3), respectively for one of the vehicle's sides, according to the formula

$$V_{c1} = \frac{2}{1 + Kvf} V_e$$ and for the other side of the vehicle, according to the formula $$V_{c2} = \frac{2Kvf}{1 + Kvf} V_e,$$ with

$Kvf=1+K(Kv-1)$, K being the skid modulation ratio, Kv the differential speed ratio and $V_e$ the mean speed of the axle carrying the wheel (3) in question.

**13.** A mixed steering control method according to any one of Claims 1 to 12, wherein the geometric law (9) determines a speed set-point Vc respectively for each side of the vehicle (1) or each wheel (3) according to a correspondence table (18) pre-established respectively for each side of the vehicle or each wheel.

**14.** A mixed steering control method according to Claim 13, wherein the correspondence table (18) of the geometric law (9) is constructed on the basis of theoretical equations.

**15.** A mixed steering control method according to Claim 13 or 14, wherein the correspondence table (18) for the geometric law (9) is constructed and adapted on the basis of empirical results.

**16.** A mixed steering control method according to any one of Claims 1 to 15, wherein the controller (11) is of the integral proportion type (19).

**17.** A mixed steering control method according to Claim 16, wherein the integral component (22) is reset when the skid steering control (7) is stopped.

**18.** A mixed steering control method according to Claim 16 or 17, wherein an anti-windup module (23), integrated into the controller (11), inhibits the integral component (22) in case of the saturation of the set-point torque ($C_c$).

**19.** A mixed steering control method according to any one of Claims 1 to 15, wherein the controller (11) is of the proportional type completed by a torque estimator (24).

**20.** A mixed steering control method according to any one of Claims 1 and 3 to 19, wherein it incorporates, for each wheel (3), an anti-overrun module (27) of the speed set-point $V_c$, which as an input receives a minimal speed limit $L_{min}$ and a maximal speed limit $L_{max}$, taken equal in absolute value to the speed set-point $V_c$, between which this module maintains the speed Vr of the wheel (3) and eliminates the transmission of the final torque $C_f$ in case of overrun.

**21.** A mixed steering control method according to Claim 20, wherein the anti-overrun module (27) uses a controlling motor (28) of the ABS/ASR type to cancel the final torque $C_f$ and wherein it drives this motor, either in on-off mode, or using a high gain servo control.

**22.** A mixed steering control method according to Claim 21, wherein the controlling motor (28) is one with a controlling motor (29) present in an ABS/ASR device of the vehicle (1) and wherein a function of the MIN/MAX type (31) between the vehicle's speed V and the speed set-point $V_c$ is applied to determine the minimal speed limit $L_{min}$ and the maximal speed limit $L_{max}$ used as an input to the anti-overrun module (27) so as to switch between the ABS/ASR function and the anti-overrun function.

**23.** A mixed steering control method according to any one of Claims 1 and 3 to 22, wherein the common mode torque set-point $C_{mc}$ is determined depending on the position $\gamma$ of the accelerator control (42) and the position F of the brake control (43).

24. A mixed steering control method according to any one of Claims 2 to 22, wherein the common mode speed set-point $V_{mc}$ is determined depending on the position $\gamma$ of the accelerator control (42) and the position F of the brake control (43).

25. A mixed steering control method according to any one of the above Claims, wherein the torque set-point $C_c$ determined by the controller (11) is multiplied by a function□ . of the vehicle's speed variable V, decreasing, with a value of 1 at nil speed and 0 at high speed, so as to progressively attenuate the influence of the skid steering control (7) when the vehicle's (1) speed V increases.

26. A mixed steering control method according to Claim 25, wherein the function A(V) is constant over a first plateau of value 1 before decreasing linearly to become constant over a second plateau of value 0.

27. A mixed steering control method according to any one of Claims 1 and 3 to 26, wherein the set-point torques $C_c$ are all reduced by a same value (37) such that the set-point torque $C_c$ for the most critical motor remains less than $C_{fmax}$-$Max(C_{mc})$ and greater than $-C_{fmax} + Min(C_{mc})$ to give priority to forward movement.

28. A mixed steering control method according to any one of Claims 1 and 3 to 26, wherein the common mode torque $C_{mc}$ is limited so as to remain below $C_{fmax} - Max(C_c)$ and above $- C_{f\,max} + Min(C_c)$ to give priority to steering.

29. A mixed steering control method according to Claim 28, wherein the set-point torques $C_c$ are all reduced by a same value (37) such that the positive limitation of the common mode torque $C_{fmax} - Max(C_c)$ remains greater than a minimal guaranteed value $C_{mcmg}$ of the common mode torque $C_{mc}$ and respectively that the negative limitation of the common mode torque $- C_{fmax} + Min(C_c)$ remains less than a minimal guaranteed value $- C_{mcmg}$ of the common mode torque $C_{mc}$ to give priority to the steering with minimal forward movement guaranteed.

30. A mixed steering control method according to any one of the above Claims, wherein, as an output of the speed servo (10), the torque set-point $C_c$ is cancelled if it is positive for an inner (34) wheel (2) with relation to a bend or if it is negative for an outer (35) wheel (2) in relation to a bend.

31. A mixed steering control method according to any one of the above Claims, wherein, as an output of the speed servo (10), the torque set-point $C_c$ is multiplied by a continuous function LD of the steering lock angle a with a value of 1 over its full domain except around 0 where it cancels itself out, so as to continually disconnect the skid steering control (7) in the vicinity of the straight lane.

32. A vehicle using a mixed steering control method according to any one of the above Claims.

**Patentansprüche**

1. Regelungsverfahren für gemischte Lenksteuerung, anwendbar für ein Fahrzeug (1), umfassend wenigstens zwei angetriebene (3) Räder (2), die jeweils an einer der Seiten des Fahrzeuges angeordnet sind, die jeweils unabhängig durch einen elektrischen Motor (5) angetrieben sind, und wenigstens ein gelenktes (4) Rad (2), **dadurch gekennzeichnet, dass** das genannte Verfahren eine Lenksteuerung durch Rutschen (7), das durch Anlegen eines Differenzgeschwindigkeitssollwertes $V_c$ an die Räder (3) einer Seite des Fahrzeugs (1) und an die Räder (3) der anderen Seite erzielt wird, mit einer herkömmlichen Lenksteuerung durch Lenkeinschlag des gelenkten Rades (4) überlagert, für eine Drehmomentsteuerung, und die folgenden Schritte umfasst:

　　- Festlegen der Eingangsgrößen:

　　　　o Messen oder Berechnen der Geschwindigkeit V des Fahrzeuges,
　　　　o Messen des Winkels $\alpha$ des Lenkeinschlags am Lenkrad,
　　　　o Messen der Position $\gamma$ der Betätigung des Gaspedals 42,
　　　　o Messen der Position F einer eventuellen Betätigung der Bremse 43,

　　- Bestimmen des Drehmomentsollwertes bei gemeinsamer Betriebsart $C_{mc}$ durch ein Schnittstellenmodul (12),
　　- Bestimmen von Geschwindigkeitssollwerten $V_c$ durch Anwendung einer Rechenfunktion (6) auf die Eingangsgrößen,
- Berechnen der Drehmomentsollwerte $C_c$ durch ein Geschwindigkeits-Regelungssystem (10) umfassend einen Regler (11), der durch die Geschwindigkeitssollwerte $V_c$ getriggert wird,
- Berechnen der End-Drehmomentsollwerte $C_f$, die an jeden Motor (5) des Rades (2) durch ein Summierglied (13) anlegbar sind, der den Drehmomentsollwert bei gemeinsamer Betriebsart $C_{mc}$ und die Drehmomentsollwerte $C_c$ hinzufügt.

2. Regelungsverfahren für gemischte Lenksteuerung, anwendbar für ein Fahrzeug (1), umfassend wenigstens zwei angetriebene (3) Räder (2), die jeweils an einer der Seiten des Fahrzeuges angeordnet sind, die jeweils unabhängig durch einen elektrischen Motor (5) angetrieben sind, und wenigstens ein gelenktes (4) Rad (2), **dadurch gekennzeichnet, dass** das genannte Verfahren eine Lenksteuerung durch Rutschen (7), die durch Anlegen eines Differenzgeschwindigkeitssollwertes $V_c$ an die Räder (2) einer Seite des Fahrzeuges (1) und an die Räder (2) der anderen Seite erzielt wird, mit einer herkömmlichen Lenksteuerung durch Lenkeinschlag der gelenkten (4) Rades (2) überlagert, für eine Geschwindigkeitssteuerung, und die folgenden Schritte umfasst:

- Festlegen der Eingangsgrößen:

o Messen oder Berechnen der Geschwindigkeit V des Fahrzeuges,
o Messen des Winkels $\alpha$ des Lenkeinschlags am Lenkrad,
o Messen der Position $\gamma$ der Betätigung des Gaspedals 42,
o Messen der Position F einer eventuellen Betätigung der Bremse 43,

- Bestimmen des Geschwindigkeitssollwertes bei gemeinsamer Betriebsart $V_{mc}$ durch ein Schnittstellenmodul (12),
- Bestimmen von Geschwindigkeitssollwerten $V_c$ durch Anwendung einer Rechenfunktion (6) auf die Eingangsgrößen und auf die Geschwindigkeit bei gemeinsamer Betriebsart $V_{mc}$,
- Berechnen der End-Drehmomentsollwerte $C_f$, die an jeden Motor (5) des Rades (2) anlegbar sind, durch ein Geschwindigkeits-Regelungssystem (10), das einen Regler (11) umfasst, der durch die Geschwindigkeitssollwerte $V_c$ getriggert wird.

3. Regelungsverfahren für gemischte Lenksteuerung nach Anspruch 1 oder 2, **dadurch gekennzeichnet, dass** sich die Rechenfunktion (6) und der Schritt des Bestimmens der Geschwindigkeitssollwerte $V_c$ aufgliedern in:

- Berechnen eines Verhältnisses K der Rutschmodulation und eines Verhältnisses Kv der Geschwindigkeitsdifferenz, indem ein Steuergesetz (8) auf die Eingangsgrößen angewendet wird,
- Bestimmen der Geschwindigkeitssollwerte $V_c$ durch Anwenden eines geometrischen Gesetzes (9) auf Kv und K.

4. Regelungsverfahren für gemischte Lenksteuerung nach irgendeinem der Ansprüche 1 bis 3, **dadurch gekennzeichnet, dass** der erste Schritt zum Bestimmen der Eingangsgrößen ein Messen oder ein automatisches Bestimmen eines strategischen Parameters S enthält und dass dieser Parameter das Steuergesetz (8) für den Schritt zum Berechnen der Verhältnisse K und Kv bestimmt.

5. Regelungsverfahren für gemischte Lenksteuerung nach irgendeinem der Ansprüche 1 bis 4, **dadurch gekennzeichnet, dass** das Steuergesetz (8) das Verhältnis Kv der Differenzgeschwindigkeit durch eine stetige, bijektive Funktion Kv($\alpha$) der Variablen Lenkeinschlagswinkel $\alpha$ berechnet, die im Wesentlichen für jeden Lenkeinschlagswinkel $\alpha$ in seinem Bereich die Gleichung Kv($-\alpha$) = 1/Kv($\alpha$) überprüft.

6. Regelungsverfahren für gemischte Lenksteuerung nach Anspruch 5, **dadurch gekennzeichnet, dass** die Werte von Kv($\alpha$) durch eine polynomische Funktion (15) der Variablen Lenkeinschlagswinkel $\alpha$ berechnet werden.

7. Regelungsverfahren für gemischte Lenksteuerung nach Anspruch 5 oder 6, **dadurch gekennzeichnet, dass** die Werte von Kv($\alpha$) durch eine Korrespondenztabelle (16) berechnet werden.

8. Regelungsverfahren für gemischte Lenksteuerung nach irgendeinem der Ansprüche 1 bis 7, **dadurch gekennzeichnet, dass** das Steuergesetz (8) das Verhältnis K der Rutschmodulation durch eine stetige und abnehmende Funktion K(V) der Variablen Geschwindigkeit V des Fahrzeuges (1) berechnet, die den Wert 1 annimmt, wenn die Geschwindigkeit Null ist, und den Wert 0, wenn die Geschwindigkeit maximal ist.

**9.** Regelungsverfahren für gemischte Lenksteuerung nach Anspruch 8, **dadurch gekennzeichnet, dass** die Funktion K(V) konstant über ein erstes Niveau des Wertes 1 ist bevor sie linear abnimmt, um auf einem zweiten Niveau des Wertes 0 konstant weiterzugehen.

**10.** Regelungsverfahren für gemischte Lenksteuerung nach irgendeinem der Ansprüche 1 und 3 bis 9, **dadurch gekennzeichnet, dass** das geometrische Gesetz (9) einen Geschwindigkeitssollwert $V_c$ pro Seite des Fahrzeuges (1) jeweils für eine der Seiten des Fahrzeuges gemäß der Formel $V_{c1} = \dfrac{2}{1 + Kvf} V$ und für die andere Seite des Fahrzeuges gemäß der Formel $V_{c2} = \dfrac{2Kvf}{1 + Kvf} V$ , mit $Kvf = 1 + K(Kv-1)$ berechnet, wobei K das Verhältnis von Rutschmodulation, Kv das Verhältnis von Differenzgeschwindigkeit und V die Geschwindigkeit des Fahrzeuges sind.

**11.** Regelungsverfahren für gemischte Lenksteuerung nach irgendeinem der Ansprüche 2 bis 9, **dadurch gekennzeichnet, dass** das geometrische Gesetz (9) einen Geschwindigkeitssollwert $V_c$ pro Seite des Fahrzeuges (1) jeweils für eine der Seiten des Fahrzeuges gemäß der Formel $V_{c1} = \dfrac{2}{1 + Kvf} V_{mc}$ und für die andere Seite des Fahrzeuges gemäß der Formel $V_{c2} = \dfrac{2Kvf}{1 + Kvf} V_{mc}$ berechnet, mit $Kvf = 1 + K(Kv-1)$, wobei K das Verhältnis von Rutschmodulation, Kv das Verhältnis von Differenzgeschwindigkeit und $V_{mc}$ der Geschwindigkeitssollwert bei gemeinsamer Betriebsart sind.

**12.** Regelungsverfahren für gemischte Lenksteuerung nach irgendeinem der Ansprüche 1 und 3 bis 9, **dadurch gekennzeichnet, dass** das geometrische Gesetz (9) einen Geschwindigkeitssollwert $V_c$ pro Rad (3) jeweils für eine der Seiten des Fahrzeuges gemäß der Formel $V_{c1} = \dfrac{2}{1 + Kvf} V_e$ und für die andere Seite des Fahrzeuges gemäß der Formel $V_{c2} = \dfrac{2Kvf}{1 + Kvf} V_e$ berechnet, mit $Kvf = 1 + K(Kv-1)$ , wobei K das Verhältnis von Rutschmodulation, Kv das Verhältnis von Differenzgeschwindigkeit und $V_e$ die mittlere Geschwindigkeit der das betreffende Rad (3) tragenden Achse sind.

**13.** Regelungsverfahren für gemischte Lenksteuerung nach irgendeinem der Ansprüche 1 bis 12, **dadurch gekennzeichnet, dass** das geometrische Gesetz (9) einen Geschwindigkeitssollwert $V_c$ jeweils pro Seite des Fahrzeuges (1) oder pro Rad (3) in Abhängigkeit von einer jeweils pro Seite des Fahrzeuges oder pro Rad vorher bestimmten Korrespondenztabelle (18) bestimmt.

**14.** Regelungsverfahren für gemischte Lenksteuerung nach Anspruch 13, **dadurch gekennzeichnet, dass** die Korrespondenztabelle (18) des geometrischen Gesetzes (9) auf der Basis von theoretischen Gleichungen aufgebaut ist.

**15.** Regelungsverfahren für gemischte Lenksteuerung nach Anspruch 13 oder 14, **dadurch gekennzeichnet, dass** die Korrespondenztabelle (18) des geometrischen Gesetzes (9) auf der Basis von empirischen Ergebnissen aufgebaut oder angepasst ist.

**16.** Regelungsverfahren für gemischte Lenksteuerung nach irgendeinem der Ansprüche 1 bis 15, **dadurch gekennzeichnet, dass** der Regler (11) ein Proportional-Integral-Regler (19) ist.

**17.** Regelungsverfahren für gemischte Lenksteuerung nach Anspruch 16, **dadurch gekennzeichnet, dass** die integrale Komponente (22) bei einem Halt der Lenksteuerung durch Rutschen (7) neu initialisiert wird.

**18.** Regelungsverfahren für gemischte Lenksteuerung nach Anspruch 16 oder 17, **dadurch gekennzeichnet, dass** ein Anti-Windup-Modul (23), das im Regler (11) integriert ist, die integrale Komponente (22) im Falle von Sättigung des Drehmomentsollwertes ($C_c$) hemmt.

**19.** Regelungsverfahren für gemischte Lenksteuerung nach irgendeinem der Ansprüche 1 bis 15, **dadurch gekennzeichnet, dass** der Regler (11) ein Proportional-Regler ist, der von einem Drehmoment-Schätzer (24) vervollständigt wird.

**20.** Regelungsverfahren für gemischte Lenksteuerung nach irgendeinem der Ansprüche 1 und 3 bis 19, **dadurch gekennzeichnet, dass** es für jedes Rad (3) ein Modul zur Nichtüberschreitung (27) des Geschwindigkeitssollwertes $V_c$ umfasst, das am Eingang eine minimale Geschwindigkeitsgrenze $L_{min}$ und eine maximale Geschwindigkeitsgrenze $L_{max}$ empfängt, die in absolutem Wert mit dem Geschwindigkeitssollwert $V_c$ gleichgesetzt werden, zwischen denen dieses Modul die Geschwindigkeit $V_r$ des Rades (3) hält, indem die Übertragung des End-Drehmomentes $C_f$ im Falle der Überschreitung unterdrückt wird.

**21.** Regelungsverfahren für gemischte Lenksteuerung nach Anspruch 20, **dadurch gekennzeichnet, dass** das Modul zur Nichtüberschreitung (27) einen Motorregler (28) vom Typ ABS/ASR verwendet, um das End-Drehmoment $C_f$ aufzuheben, und dass diesen Motor (28) entweder mit allem oder nichts oder gemäß einem Regelungssystem mit sehr großer Verstärkung steuert.

**22.** Regelungsverfahren für gemischte Lenksteuerung nach Anspruch 21, **dadurch gekennzeichnet, dass** der Motorregler (28) mit einem Motorregler (29) verschmolzen ist, der in einer ABS/ASR-Vorrichtung des Fahrzeuges (1) vorhanden ist und dass eine Funktion vom Typ MIN/MAX (31) zwischen der Geschwindigkeit des Fahrzeuges V und dem Geschwindigkeitssollwert $V_c$ angewendet wird, um die Grenze der Minimalgeschwindigkeit $L_{min}$ und die Grenze der Maximalgeschwindigkeit $L_{max}$ am Eingang des Moduls zur Nichtüberschreitung (27) zu bestimmen, um eine Umschaltung zwischen der Funktion ABS/ASR und der Funktion Nichtüberschreitung zu bewerkstelligen.

**23.** Regelungsverfahren für gemischte Lenksteuerung nach irgendeinem der Ansprüche 1 und 3 bis 22, **dadurch gekennzeichnet, dass** der Drehmomentsollwert bei gemeinsamer Betriebsart $C_{mc}$ in Abhängigkeit von der Position $\gamma$ der Betätigung des Gaspedals (42) und der Position F der Betätigung der Bremse (43) bestimmt wird.

**24.** Regelungsverfahren für gemischte Lenksteuerung nach irgendeinem der Ansprüche 2 bis 22, **dadurch gekennzeichnet, dass** der Geschwindigkeitssollwert bei gemeinsamer Betriebsart $V_{mc}$ in Abhängigkeit von der Position $\gamma$ der Betätigung des Gaspedals (42) und der Position F der Betätigung der Bremse (43) bestimmt wird.

**25.** Regelungsverfahren für gemischte Lenksteuerung nach irgendeinem der vorhergehenden Ansprüche, **dadurch gekennzeichnet, dass** der durch den Regler (11) bestimmte Drehmomentsollwert $C_c$ mit einer Funktion A der Variablen Geschwindigkeit V des Fahrzeuges, die abfallend ist vom Wert 1 bei Geschwindigkeit Null und 0 bei hoher Geschwindigkeit ist, multipliziert wird, um den Einfluss der Lenksteuerung durch Rutschen (7) schrittweise zu unterdrücken, wenn die Geschwindigkeit V des Fahrzeuges (1) ansteigt.

**26.** Regelungsverfahren für gemischte Lenksteuerung nach Anspruch 25, **dadurch gekennzeichnet, dass** die Funktion A(V) konstant über ein erstes Niveau des Wertes 1 ist bevor sie linear abnimmt, um auf einem zweiten Niveau des Wertes 0 konstant weiterzugehen.

**27.** Regelungsverfahren für gemischte Lenksteuerung nach irgendeinem der Ansprüche 1 und 3 bis 26, **dadurch gekennzeichnet, dass** alle Solldrehmomente $C_c$ um einen gleichen Wert (37) reduziert derart werden, dass das Solldrehmoment $C_c$ für den kritischsten Motor kleiner als $C_{fmax}$ - Max ($C_{mc}$) und größer als - $C_{fmax}$ + Min ($C_{mc}$) verbleibt, um der Vorwärtsbewegung eine Priorität zu verleihen.

**28.** Regelungsverfahren für gemischte Lenksteuerung nach irgendeinem der Ansprüche 1 und 3 bis 26, **dadurch gekennzeichnet, dass** das Drehmoment bei gemeinsamer Betriebsart $C_{mc}$ begrenzt wird, um kleiner als $C_{fmax}$ - Max ($C_c$) und größer als - $C_{fmax}$ + Min ($C_c$) zu bleiben, um der Lenkung eine Priorität zu verleihen.

**29.** Regelungsverfahren für gemischte Lenksteuerung nach Anspruch 28, **dadurch gekennzeichnet, dass** alle Solldrehmomente $C_c$ um einen gleichen Wert (37) reduziert derart werden, dass die positive Begrenzung des Drehmomentes bei gemeinsamer Betriebsart $C_{fmax}$ - Max ($C_c$) größer als ein minimaler garantierter Wert $C_{mcmg}$ des Drehmomentes bei gemeinsamer Betriebsart $C_{mc}$ verbleibt und dass jeweils die negative Begrenzung des Drehmomentes bei gemeinsamer Betriebsart - $C_{fmax}$ + Min ($C_c$) kleiner als ein minimaler garantierter Wert - $C_{mcmg}$ des Drehmomentes bei gemeinsamer Betriebsart $C_{mc}$ verbleibt, um der Lenkung mit garantierter minimaler Vorwärtsbewegung eine Priorität zu verleihen.

30. Regelungsverfahren für gemischte Lenksteuerung nach irgendeinem der vorhergehenden Ansprüche, **dadurch gekennzeichnet, dass** am Ausgang der Geschwindigkeitsregelung (10) der Drehmomentsollwert $C_c$ aufgehoben wird, wenn er für ein in Bezug auf die Kurve inneres (34) Rad (2) positiv ist oder wenn er für ein in Bezug auf die Kurve äußeres (35) Rad (2) negativ ist.

31. Regelungsverfahren für gemischte Lenksteuerung nach irgendeinem der vorhergehenden Ansprüche, **dadurch gekennzeichnet, dass** am Ausgang der Geschwindigkeitsregelung (10) der Drehmomentsollwert $C_c$ mit einer stetigen Funktion LD der Variablen Lenkeinschlagwinkel $\alpha$ multipliziert wird, die für dessen gesamten Bereich den Wert 1 annimmt außer um 0 herum, wo sie sich aufhebt, um die Lenksteuerung durch Rutschen (7) kontinuierlich von der Nähe der geraden Strecke zu trennen.

32. Fahrzeug, das ein Regelungsverfahren der gemischten Lenksteuerung gemäß irgendeiner der vorhergehenden Ansprüche verwendet.

FIG. 1

FIG. 2

## FIG. 3

**Loi de Commande** **8**

V →
α →
S →

K →
Kv →

**Loi Géométrique** **9**

**6**

$Y_c$ / 6 →

**Asservissement de vitesse** **10**

**11**

$C_c$ / 6

γ →
F →

**Interface** **12**

$C_{mc}$ →

(+) **13**

/ 6 $C_f$ →

FIG. 3

## FIG. 4

**Loi de Commande** **8**

V →
α →
S →

K →
Kv →

**Loi Géométrique** **9**

**6**

$Y_c$ / 6 →

**Asservissement de vitesse** **10**

**11**

$C_c = C_f$ / 6 →

$V_{mc}$

γ →
F →

**Interface** **12**

FIG. 4

FIG. 5

FIG. 6

**61**

**20**

**62**

$V_c$

$V_m$

−

$K_p$

+

$C_c$

**19**

$K_i$

$1/p$

**22**

**21**

FIG. 7

**63**

**25**

**64**

$V_c$

$V_m$

−

$K_p$

+

$C_c$

**26**

**24**

V

Kv * K

S

Table de correspondance

FIG. 8

FIG. 9

FIG. 10

FIG. 11

FIG. 12

FIG. 13

FIG. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2671043
- EP 1186459 A